# FASCICULE DE BREVET EUROPEEN

(11) **EP 3 284 224 B1**
(45) Date de publication et mention de la délivrance du brevet: **12.02.2020**
(21) Numéro de dépôt: 16723416.0
(22) Date de dépôt: 15.04.2016
(51) Int. Cl.: H04L 12/931, H04L 12/713, H04L 12/715, H04L 12/721, H04L 12/707

(54) **PROCÉDÉ D'ÉMULATION DUNE CONNEXION À CHEMINS MULTIPLES**
VERFAHREN ZUR EMULATION EINER MEHRWEGVERBINDUNG
METHOD FOR EMULATING A MULTIPATH CONNECTION

(30) Priorité: 17.04.2015 FR 1553464
(43) Date de publication de la demande: 21.02.2018
(73) Titulaire: Orange, 75015 Paris (FR)
(72) Inventeur: BOUCADAIR, Mohamed, 35830 Betton (FR); JACQUENET, Christian, 35131 Pont-pean (FR)
(86) Numéro de dépôt international: PCT/FR2016/050886
(87) Numéro de publication internationale: WO 2016/166493

(56) Documents cités:
- EP-A1- 2 763 362
- EP-A2- 2 538 637
- WO-A1-2014/068062
- WO-A2-2011/127189

## Description

La présente invention concerne le domaine des télécommunications, et notamment les réseaux de communications aptes à mettre en œuvre le protocole IP (Internet Protocol). Plus particulièrement, la présente invention concerne la fourniture de services dans les réseaux IP « à valeur ajoutée », c'est-à-dire les réseaux capables d'effectuer des traitements différenciés selon la nature du trafic de données acheminé dans le réseau.

Un exemple de l'état de l'art se trouve dans le document WO2014/068062.

L'invention s'applique à tout type de dispositif-client tel qu'un terminal fixe ou mobile, ou une passerelle domestique (« *Residential Gateway* » en anglais), ou une passerelle située dans une entreprise, ou une passerelle d'opérateur réseau (« *Gateway* » en anglais), ou encore un décodeur TV (« *Set-Top Box* », ou STB en anglais). Par souci de concision, un dispositif-client de n'importe quel type sera souvent appelé « terminal » ci-après.

Les terminaux, tels que les téléphones intelligents (« *smartphone* » en anglais) et les ordinateurs personnels (« *Personal Computer* », ou PC en anglais) sont désormais capables d'activer et d'exploiter plusieurs interfaces logiques liées à une ou plusieurs interfaces physiques. De tels terminaux sont dits « multi-interfaces » (« *Multi-Interface* », ou MIF en anglais).

Plusieurs adresses IP peuvent alors être attribuées à ces terminaux MIF pour qu'ils puissent se connecter à différents types de réseaux tels qu'un réseau fixe, un réseau mobile ou un réseau WLAN (initiales des mots anglais « *Wireless Local Area Network* » signifiant « Réseau Local Sans-Fil », dont les réseaux Wi-Fi sont un exemple emblématique), de manière simultanée ou différée. Ces adresses IP peuvent :
- appartenir à la même famille d'adresses ou à des familles d'adresses distinctes (IPv4, IPv6 ou les deux),
- avoir des durées de vie différentes,
- avoir des portées différentes, par exemple adresse IPv4 privée, adresse IPv6 unique de portée locale (*Unique Local Address,* ou ULA en anglais), ou adresse IPv6 de portée globale (*Global Unicast Address,* ou GUA en anglais), et
- être affectées à la même interface réseau logique ou à différentes interfaces réseau logiques.

On notera toutefois que la caractéristique « MIF » est volatile, car la capacité d'utiliser plusieurs interfaces dépend des conditions de raccordement au(x) réseau(x), de la localisation du dispositif, ou d'autres facteurs. Un dispositif MIF peut notamment exploiter la pluralité d'interfaces dont il dispose en cours d'établissement d'une connexion simple (c'est-à-dire, une connexion établie le long d'un chemin unique avec un correspondant donné), voire après l'établissement d'une connexion simple. On notera également qu'un dispositif ne sait pas a priori s'il lui est possible d'utiliser *plusieurs* chemins distincts pour établir une connexion avec un correspondant donné ; plus précisément, le dispositif n'acquiert cette information (le cas échéant) qu'à l'issue d'une phase au cours de laquelle il tente d'établir une connexion utilisant des chemins multiples avec le correspondant.

Lorsqu'un terminal dispose de plusieurs interfaces capables de le raccorder à différents réseaux d'accès (par exemple : fixe, mobile, ou WLAN), il bénéficie alors d'un accès dit « hybride », parce qu'il combine différentes technologies de réseaux d'accès. Les offres de services concernant un terminal disposant d'un accès hybride reposent sur l'introduction dans le réseau de fonctions permettant d'agréger l'ensemble des connexions réseau d'un terminal (par exemple : WLAN et 3G, ou ADSL, WLAN et 4G).

On rappelle à cet égard que, dans le domaine des réseaux, on appelle « agrégation de liens » le regroupement de plusieurs liens associés à autant d'interfaces (logiques) comme s'il s'agissait d'un seul lien associé à une seule interface, notamment dans le but d'accroître le débit au-delà des limites d'un seul lien, mais également d'appliquer les mêmes procédures d'exploitation à l'ensemble des liens ainsi agrégés (notion de partage de destin, « *fate sharing* » en anglais). Eventuellement, l'agrégation de liens permet aussi de faire en sorte que d'autres interfaces prennent le relais si un lien réseau tombe en panne (principe de redondance). L'agrégation de liens s'applique à tout type de trafic acheminé le long de ces liens, y compris du trafic IP.

L'agrégation de liens peut également être utilisée pour répartir le trafic sur plusieurs liens. Dans ce cas, la répartition de trafic entre des liens qui font l'objet d'un agrégat dépend de divers paramètres ; la répartition de trafic dépend par exemple du type de trafic, tel que TCP (Transmission Control Protocol) ou UDP (User Datagram Protocol), ou de la politique d'ingénierie de trafic, telle que la Qualité de Service (« *Quality of Service* », ou QoS en anglais) requise.

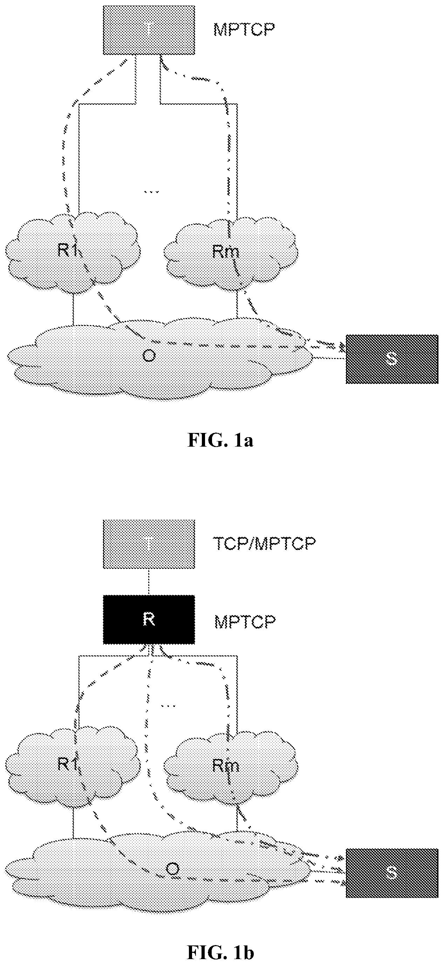

A titre d'exemple, on a représenté sur la **figure 1a** un terminal T connecté à un serveur S via plusieurs réseaux IP notés R1, ..., Rm et O, en mettant en œuvre le protocole de connexion à chemins multiples MPTCP (Multi-Path TCP). La nature des différents réseaux d'accès R1, ..., Rm peut être filaire, sans-fil, ou autre ; par ailleurs, ces accès peuvent être multiples, c'est-à-dire que le terminal T peut avoir la capacité de se connecter à différents réseaux d'accès de manière simultanée ou non.

De même, on a représenté sur la **figure 1b** un terminal T compatible avec MPTCP ou seulement avec TCP, et placé derrière un équipement, dit dispositif-relais R ; ce dispositif-relais R est lui-même connecté à un serveur S via plusieurs réseaux IP notés R1, ..., Rm et O, en mettant en œuvre le protocole de connexion à chemins multiples MPTCP.

De manière générale, on appellera « dispositif-relais » un équipement localisé dans le réseau et agissant au nom d'un ou de plusieurs dispositif-clients, tels qu'un terminal ou une passerelle. Cette configuration permet au dispositif-client de bénéficier d'un usage optimisé des ressources réseau disponibles, et également d'établir des connexions à chemins multiples dans un délai réduit.

On notera que l'agrégation de liens ne fait aucune hypothèse quant à la configuration de la machine distante. Ainsi, une machine source peut activer une fonction d'agrégation de liens sans que la machine distante n'utilise une telle fonction.

Divers modes d'agrégation peuvent être envisagés, parmi lesquels les trois modes suivants :
- mode de repli (« *backup* » en anglais) : ce mode consiste à utiliser des chemins secondaires en cas d'indisponibilité des chemins primaires, et ce, afin d'améliorer la disponibilité réseau et, partant, la robustesse et la fiabilité des connexions IP établies sur les différents liens ;
- mode associatif (« *bonding* » en anglais) : ce mode consiste à utiliser les ressources associées avec tout ou partie des chemins disponibles, les flux IP associés à une même application pouvant être répartis entre plusieurs chemins ; le choix d'exploiter l'intégralité des chemins, ou seulement une partie d'entre eux, peut par exemple être conditionné par la nature du trafic ou les caractéristiques de disponibilité ou de fiabilité associées à chaque chemin, lesquelles peuvent varier fortement d'un chemin à l'autre ; tous les chemins sélectionnés pour ce mode associatif sont considérés comme étant des chemins primaires ; et
- mode dit de « confort » : ce mode est similaire au mode associatif, si ce n'est que les flux d'une application donnée ne sont pas répartis entre plusieurs chemins, mais sont envoyés sur un seul chemin.

On notera que ces modes ne sont pas mutuellement exclusifs, et ne sont pas spécifiques à un type particulier de trafic. Ainsi, ils peuvent être mis en place indépendamment de la nature du trafic qui sera acheminé le long des chemins agrégés selon l'un ou l'autre des différents modes.

Cependant, l'exploitation de chemins multiples pour l'établissement de communications soulève des problèmes de diverses natures.

Il est communément admis que l'utilisation de mécanismes de répartition de charge entre plusieurs chemins doit veiller à ce que ces chemins possèdent un niveau de qualité de transfert comparable, afin notamment de ne pas fragiliser l'intégrité des données caractéristiques d'une connexion donnée et échangées le long de ces différents chemins (la qualité de transfert peut être caractérisée par plusieurs paramètres dont, notamment, la latence, la gigue et/ou le taux de perte de paquets).

Lorsqu'un terminal bénéficie d'un accès hybride, sa capacité effective à exploiter l'ensemble de ses interfaces est généralement associée à la qualité des réseaux d'accès concernés, telle que perçue par le terminal ou par une application activée dans le terminal. Cette qualité peut être exprimée en termes de bande passante disponible, ou de temps d'accès à la ressource désirée, ou encore en termes de variation du délai de transmission, comme indiqué dans le document RFC 3393 de l'IETF (Internet Engineering Task Force). Cette qualité est naturellement variable d'un réseau d'accès à l'autre, et peut présenter de fortes disparités de nature à compromettre l'établissement d'une communication à chemins multiples sur les différents réseaux d'accès ; le risque d'une perte d'intégrité des flux échangés au cours de la communication sera d'autant plus important que ces disparités seront grandes, au point que la communication pourrait devenir inintelligible. De plus, cette disparité varie dans le temps en fonction, par exemple, du taux d'utilisation des ressources d'un réseau. Quant au lien agrégé, sa qualité dépend aussi de la localisation et de l'efficacité des fonctions réseau qui permettent d'agréger l'ensemble des connexions réseau d'un terminal.

Ces niveaux de qualité différents peuvent compromettre l'établissement de sous-sessions supplémentaires dans le contexte d'une connexion à chemins multiples. L'importance du risque de perte d'intégrité évoqué précédemment pourrait inciter le terminal à n'établir qu'une connexion simple, quitte à perdre les bénéfices caractéristiques d'une connexion à chemins multiples, tels que l'optimisation des ressources en bande passante disponibles ou la préservation de la continuité d'une connexion en cas de perte de rattachement à un premier réseau et de rattachement à un second réseau.

Un tel risque est par ailleurs exacerbé dans le contexte d'un terminal ne comportant pas en propre de moyens lui permettant d'établir une connexion à chemins multiples, et faisant appel pour ce faire à un dispositif-relais tel que décrit succinctement ci-dessus. Dans ce contexte, la question de la disparité des niveaux de qualité associés à l'utilisation de plusieurs fonctions-relais disponibles (par exemple, selon la localisation du terminal distant avec lequel le terminal souhaite établir une communication) est d'autant plus complexe à résoudre que le terminal ne dispose pas nécessairement des informations et de l'intelligence requises pour sélectionner le dispositif-relais présentant les meilleurs garanties de qualité, par exemple selon la nature du trafic, de l'application, ou du service associés à la communication.

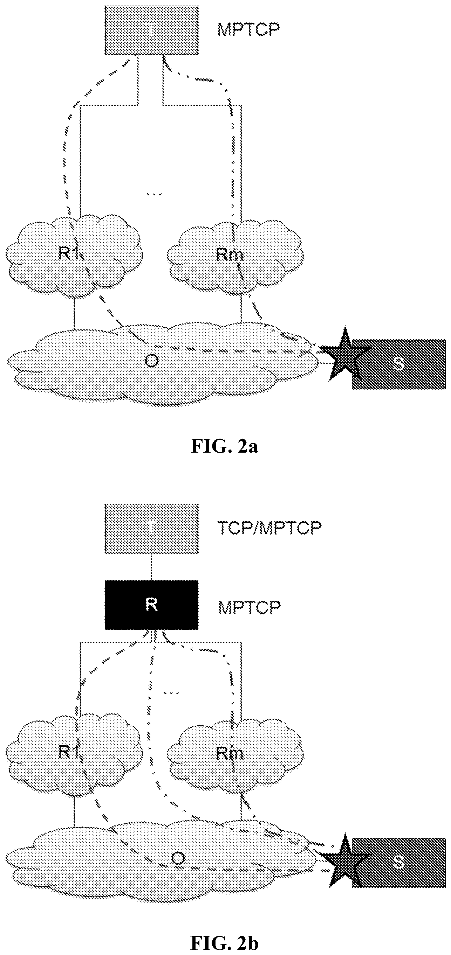

Par ailleurs, les protocoles à chemins multiples ne font pas encore, à ce jour, l'objet d'une adoption généralisée par les serveurs de contenus. Ainsi, certains serveurs de contenus traitent les connexions multiples comme des connexions disjointes, et ne disposent pas de mécanisme leur permettant de corréler plusieurs connexions pour les associer à un et un seul terminal, ce qui a pour conséquence fâcheuse l'échec de toute tentative d'établissement d'une connexion à chemins multiples, comme illustré sur la **figure 2a****.**

Comme le montre la **figure 2b**, ce problème de l'incompatibilité d'un serveur avec les connexions à chemins multiples impacte l'efficacité des communications de tout terminal souhaitant communiquer avec un tel serveur, que le terminal soit directement connecté au réseau ou via un dispositif-relais.

Pour aider les terminaux, passerelles résidentielles (par exemple, domestiques ou d'entreprise), décodeurs TV et autres dispositifs-clients à établir et maintenir des connexions via des chemins multiples, les fournisseurs de connectivité IP utilisent des dispositifs appelés « concentrateurs de connexions réseau ». On appelle « concentrateur de connexions réseau » toute fonction réseau permettant d'agréger les connexions exploitant les différents chemins susceptibles d'être utilisés par un dispositif pour établir une communication avec un dispositif distant.

Un concentrateur de connexions réseau (on utilisera simplement le terme de « concentrateur » par souci de concision) peut, par exemple, être une fonction embarquée dans une passerelle résidentielle, ou cohabiter avec une fonction-relais (« *proxy* » en anglais) MPTCP ou SCTP (Stream Control Transmission Protocol) ou avec un point de terminaison de tunnel GRE (Generic Routing Encapsulation), ou encore être un point de terminaison de tunnels IP-in-IP ou de tunnels de niveau 2. Le cas échéant, l'agrégat de tous les chemins multiples par un concentrateur peut donner lieu à l'établissement d'un ou plusieurs tunnels virtuels, par exemple pour faciliter les opérations de gestion (par isolation du trafic caractéristique de la communication établie sur les différents chemins ainsi agrégés, et amélioration du processus de détection de pannes) liées à l'établissement de cette communication.

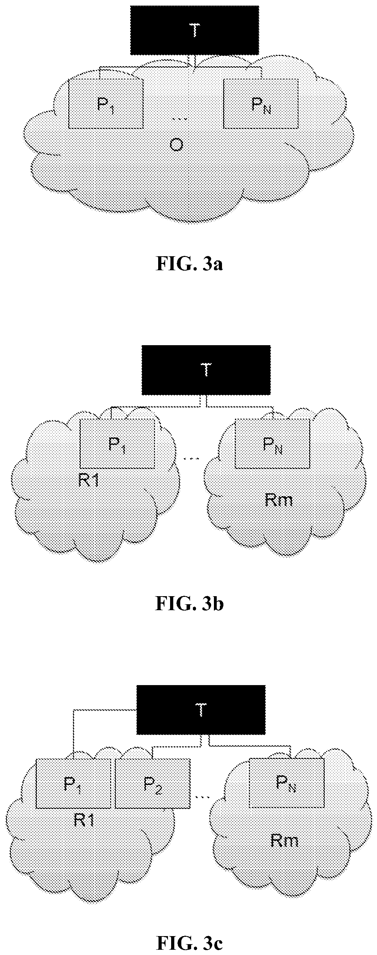

Les **figures 3a, 3b et 3c** illustrent, à titre d'exemples, divers types d'architectures associées à des concentrateurs de connexions réseau.

Ces figures montrent un terminal T connecté à un ou plusieurs réseaux IP R1, ..., Rm ou O via *N* nœuds (*P*₁, *P*₂*, ..., P_{N}*) embarquant une fonction de concentrateur de connexions réseau. Un tel nœud peut par exemple être une passerelle (domestique ou d'entreprise) ou un routeur IP. On voit sur les figures que :
- le terminal peut être connecté à un seul réseau O géré par un seul fournisseur de connectivité IP ayant déployé au moins un concentrateur de connexions réseau (figure 3a), ou
- le terminal peut être connecté à m réseaux R1, ..., Rm qui tous hébergent au moins un concentrateur de connexions réseau (figure 3b), ou encore
- le terminal peut être connecté à m réseaux R1, ..., Rm dont une partie héberge plusieurs concentrateurs de connexions réseau (figure 3c).

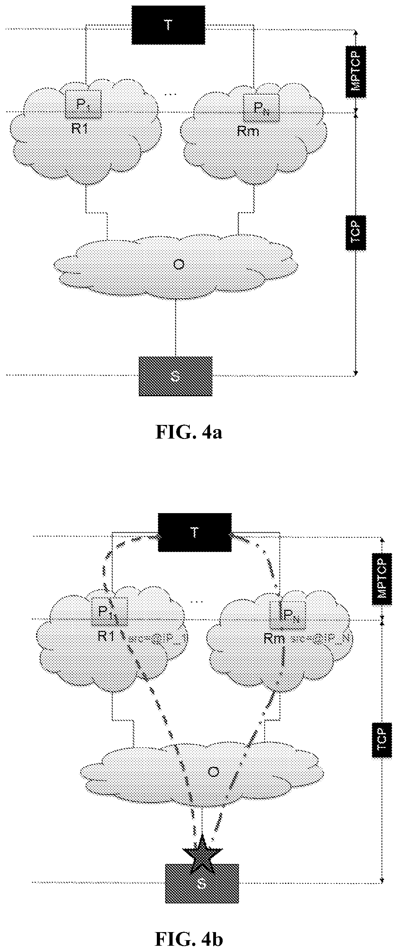

Or, avantageusement, l'intervention d'un concentrateur de connexions réseau a notamment pour effet qu'une connexion qui est vue par un dispositif local comme étant une connexion à chemins multiples, peut être vue par un dispositif distant comme étant une pluralité de connexions simples, ainsi que l'illustre la **figure 4a****.**

Cependant, même en présence d'un ou plusieurs concentrateurs, des problèmes supplémentaires surgissent. Notamment, comme illustré sur la **figure 4b****,** certaines connexions (par exemple TCP) d'un agrégat seront rejetées par un dispositif distant, car ce dernier sera incapable de corréler ces différentes connexions pour les traiter comme une connexion agrégée émise par un, et un seul dispositif-client, du fait que les messages parvenant au dispositif distant présentent des adresses source (@IP_1 ,@IP_2, ...,@IP_N) différentes.

Une première approche consiste à faire en sorte que chaque terminal n'utilise qu'une seule adresse comme adresse source des paquets qu'il émet sur l'ensemble de ses réseaux d'accès. Mais cette approche n'est pas une bonne solution au problème susvisé, car les réseaux d'accès activent des mécanismes de vérification d'adresse source pour éviter le piratage et l'usurpation de préfixes (mécanismes « *anti-spoofing* » en anglais). Ainsi, les paquets émis avec une adresse autre que celle allouée par un réseau d'accès seront rejetés par ce réseau d'accès (car assimilés à des tentatives de vol d'adresses).

Naturellement, le risque de piratage pourrait être minimisé, voire nul, si une coordination était mise en place entre les opérateurs des différents réseaux d'accès, ou lorsque les différents réseaux d'accès sont gérés par un même opérateur de connectivité réseau. Mais la coordination entre divers opérateurs de réseaux d'accès pour allouer une même adresse et/ou un même préfixe à un terminal n'est pas réaliste. Quant à l'hypothèse d'un opérateur unique, elle est restrictive car les terminaux ont la possibilité d'utiliser des réseaux qui ne sont pas gérés par le même opérateur, dans un contexte classique de dérégulation. En outre, assurer une même politique d'adressage pour l'ensemble des réseaux d'accès opérés par un même opérateur a des implications d'ingénierie, voire organisationnelles, conséquentes ; en effet, la réalité des déploiements, influencés par des contraintes réglementaires, ainsi que par des conditions d'allocation de blocs d'adresses, et guidés par le souci d'assurer une flexibilité de déploiement par segment de réseau (par exemple, fixe et mobile), est telle que les opérateurs dits « convergents » utilisent des plans d'adressage différents pour les différents réseaux d'accès qu'ils exploitent.

Une autre approche consiste à déployer un, et un seul concentrateur, les paquets émis via l'ensemble des réseaux d'accès étant interceptés par ce même concentrateur. Mais cette approche présente, elle aussi, de sérieux inconvénients, comme on va maintenant le montrer.

Une première variante consiste à activer des mécanismes de routage dans chaque réseau d'accès pour rediriger le trafic vers ledit concentrateur. Pour ce faire, le réseau d'accès doit inspecter l'intégralité du trafic, ce qui nécessite des fonctions complexes de type DPI (Deep Packet Inspection). Par ailleurs, cette solution n'est pas adaptée si un mécanisme de répartition de charge est activé par le réseau hébergeant la fonction de concentrateur (par exemple, si l'affectation d'un concentrateur pour servir un terminal se fait lors du rattachement au réseau), car les politiques d'ingénierie de trafic des réseaux d'accès n'hébergeant pas le concentrateur sélectionné devraient être ajustées dynamiquement pour prendre en compte les contraintes d'un *autre* réseau, ce qui serait extrêmement compliqué à mettre en œuvre.

Une deuxième variante consiste à recourir à un mécanisme d'encapsulation (par exemple, GRE ou IP-in-IP) pour forcer le passage des paquets par un même concentrateur, quel que soit le réseau d'accès utilisé pour émettre les paquets. Mais l'encapsulation introduit une complexité supplémentaire, qui peut, en fonction du schéma d'encapsulation utilisé, aller jusqu'à annuler les effets positifs d'un mécanisme d'agrégation de liens. L'encapsulation est également de nature à dégrader sensiblement les performances de commutation de l'équipement qui termine l'ensemble des tunnels GRE ou IP-in-IP et abrite également la fonction de concentrateur. De plus, des problèmes de passage de NAT et de pare-feu peuvent être rencontrés lorsque l'on utilise certains mécanismes d'encapsulation et que des règles de filtrage restrictives sont configurées sur un NAT ou un pare-feu placé sur un, ou plusieurs des chemins multiples. Enfin, la qualité des communications à chemins multiples dépendrait de la localisation du concentrateur, mais aussi des performances des différents réseaux d'accès utilisés pour joindre ce concentrateur, et la Qualité d'Expérience (« *Quality of Experience,* ou QoE en anglais) telle que perçue par l'utilisateur du dispositif-client dépendrait des conditions de raccordement aux divers réseaux.

La présente invention concerne donc, selon un premier aspect, un procédé d'émulation d'une connexion à chemins multiples, dans lequel les paquets de données émis ou reçus par un dispositif-client donné sont interceptés par une pluralité de concentrateurs situés dans au moins un réseau auquel ledit dispositif-client est connecté, chaque concentrateur permettant d'agréger des connexions exploitant une pluralité de chemins susceptibles d'être utilisés par le dispositif-client. Ledit procédé est remarquable en ce que l'on désigne de manière dynamique l'un de ces concentrateurs comme étant le « concentrateur principal » et le, ou les autres concentrateurs comme étant les « concentrateurs secondaires », et en ce que ledit concentrateur principal ou un concentrateur secondaire :
a) reçoit un paquet de données émis par le dispositif-client à destination d'un correspondant,
b) retire du paquet reçu, le cas échéant, toutes les options à chemins multiples,
c) remplace l'adresse source du paquet reçu par une adresse du concentrateur principal, et
d) envoie le paquet ainsi modifié audit correspondant.

Grâce à ces dispositions, un correspondant donné d'un dispositif-client, en recevant de la part de ce dispositif-client un ensemble de paquets modifiés conformément à l'invention, associe tous ces paquets à une même connexion simple, initialisée par un dispositif-client ayant (vu dudit correspondant) pour adresse ladite adresse du concentrateur principal, que l'on appellera « adresse externe ». Ainsi, la communication peut se dérouler avec succès, même si ce correspondant n'est pas compatible avec les connexions à chemins multiples.

Lorsqu'un paquet émis par le dispositif-client est intercepté par un concentrateur secondaire, ce dernier peut, comme exposé succinctement ci-dessus, envoyer le paquet modifié au correspondant. En variante, selon des caractéristiques particulières, ledit concentrateur secondaire peut mettre en œuvre les étapes suivantes :
- insertion dans le paquet d'une option mentionnant ladite adresse source du paquet ainsi que d'une option mentionnant l'adresse de destination du paquet,
- remplacement de l'adresse source du paquet par une adresse du concentrateur secondaire,
- remplacement de l'adresse de destination du paquet par une adresse dudit concentrateur principal, et
- envoi du paquet ainsi modifié au concentrateur principal,
lesdites étapes a), b), c) et d) étant ensuite mises en œuvre par le concentrateur principal.
Cette variante permet de mettre en œuvre une politique de distribution de trafic privilégiant l'envoi des paquets au correspondant à partir du concentrateur principal plutôt qu'à partir d'un concentrateur secondaire.

Selon d'autres caractéristiques particulières, suite à l'émission par ledit correspondant d'un paquet de données destiné audit dispositif-client :
a') ledit paquet est intercepté par ledit concentrateur principal, ou par un concentrateur secondaire situé sur un chemin suivi par le paquet et aboutissant à ladite adresse du concentrateur principal,
b') le concentrateur principal ou un concentrateur secondaire insère, le cas échéant, des options à chemins multiples dans le paquet, et
c') le concentrateur principal ou un concentrateur secondaire remplace l'adresse de destination du paquet par une adresse du dispositif-client, et envoie le paquet ainsi modifié au dispositif-client.

Grâce à ces dispositions, on assure un acheminement efficace des paquets envoyés en retour au dispositif-client par son correspondant. En effet, l'adresse source des paquets précédemment reçus par le correspondant pour cette connexion (adresse externe) étant une adresse du concentrateur principal, le correspondant utilise cette adresse externe en tant qu'adresse de destination des paquets qu'il émet au titre de cette connexion, bien que ces paquets soient en fait destinés au dispositif-client.

Selon des caractéristiques encore plus particulières, ladite étape c') comprend les sous-étapes suivantes :
- ledit concentrateur principal remplace l'adresse de destination du paquet par l'adresse d'un concentrateur secondaire, insère dans le paquet une option mentionnant l'adresse dudit dispositif-client, et envoie le paquet ainsi modifié audit concentrateur secondaire,
- le concentrateur secondaire remplace l'adresse de destination du paquet par l'adresse du dispositif-client mentionnée dans ladite option, et
- le concentrateur secondaire envoie le paquet ainsi modifié au dispositif-client.

Grâce à ces dispositions, on peut mettre en œuvre une politique de distribution de trafic privilégiant l'envoi des paquets au dispositif-client à partir d'un concentrateur secondaire plutôt qu'à partir du concentrateur principal.

Selon d'autres caractéristiques particulières, un concentrateur de ladite pluralité de concentrateurs est désigné comme concentrateur « principal » lorsque, ledit dispositif-client ayant initialisé une connexion à chemins multiples et envoyé un premier paquet de données sur cette connexion, ledit paquet est d'abord intercepté par ledit concentrateur.

Grâce à ces dispositions, on détermine de manière simple et automatique, dans un groupe de concentrateurs associés audit dispositif-client, celui qui jouera le rôle de concentrateur principal (et donc celui, ou ceux qui joueront le rôle de concentrateurs secondaires) pour une connexion à chemins multiples donnée.

En variante, un concentrateur de ladite pluralité de concentrateurs peut être désigné comme concentrateur « principal » ou concentrateur « secondaire » en fonction de l'adresse de destination dudit paquet reçu, ou en fonction de la disponibilité d'une route issue de ce concentrateur pour joindre ledit correspondant, ou encore en fonction de la Qualité de Service offerte par le concentrateur pour joindre ledit correspondant.

De manière générale, l'invention offre ainsi les avantages suivants :
- une gestion optimale du, ou des concentrateurs de connexions réseau,
- la possibilité de s'adapter aux conditions de raccordement aux réseaux (par exemple, en fonction des débits d'accès disponibles),
- une augmentation de la capacité réseau utilisée par un terminal,
- le bénéfice des avantages offerts par les mécanismes d'agrégation de liens, sans pour autant imposer une quelconque intelligence aux serveurs distants,
- une procédure sécurisée de basculement du trafic vers des serveurs de secours, et
- une détection proactive des anomalies réseaux, permettant une prise de décision adéquate pour rediriger le trafic, si besoin, vers un autre concentrateur de connexions réseau.

On notera que le procédé d'émulation d'une connexion à chemins multiples selon l'invention s'applique à tout type de trafic IP. En particulier, ce procédé peut être avantageusement mis en œuvre pour échanger des données transportées conformément aux protocoles TCP, UDP, SCTP, IP-in-IP, TCP-over-UDP, ou TCP-over-TCP. A titre d'exemple, la mise en place de tunnels GRE ou IP-in-IP permet d'agréger tout ou partie du trafic IP (incluant notamment le trafic TCP et UDP) entre un terminal, et un ou plusieurs concentrateurs.

On notera également que ledit dispositif-client peut être n'importe quel dispositif compatible avec le protocole IP. Ce dispositif-client peut être de type quelconque, par exemple un terminal, un routeur, une passerelle résidentielle, ou un décodeur TV, et peut être un dispositif MIF ou un dispositif mono-interface. Il peut disposer d'une ou plusieurs adresses IP affectées à chacune de ses interfaces physiques ou logiques. Il peut aussi ne disposer que d'une seule interface, auquel cas on supposera qu'il est situé derrière un dispositif-relais (tel qu'un routeur ou une passerelle résidentielle) connecté à un ou plusieurs réseaux et compatible avec un mécanisme d'agrégation de liens. Par ailleurs, ce dispositif-client peut être configuré pour s'abstenir d'exploiter un mécanisme d'agrégation de liens réseau pour certains réseaux, ou dans certaines conditions de fonctionnement (par exemple, en cas de surcharge des concentrateurs de connexions réseau).

Par ailleurs, dans le cas d'un dispositif-client compatible avec le protocole MPTCP (mentionné ci-dessus), l'invention permet d'améliorer significativement l'ingénierie et le fonctionnement (que l'on décrira ci-dessous) des connexions à chemins multiples, en améliorant la qualité et la robustesse du processus de gestion de sous-sessions caractéristique du protocole MPTCP. Par exemple, la mise en place de tunnels, mentionnée ci-dessus, peut être avantageusement combinée avec les fonctions MPTCP pour des besoins d'ingénierie, tels qu'une réduction de la charge des relais MPTCP le cas échéant, si le serveur distant est compatible avec le protocole MPTCP ; un opérateur réseau pourra ainsi optimiser les ressources réseau dédiées à une fonction-relais MPTCP.

Selon un deuxième aspect, l'invention concerne divers dispositifs.

Elle concerne ainsi, premièrement, un concentrateur, dit concentrateur principal, situé dans un réseau auquel un dispositif-client donné est connecté, comprenant des moyens pour intercepter les paquets de données émis ou reçus par ledit dispositif-client et pour agréger des connexions exploitant une pluralité de chemins susceptibles d'être utilisés par le dispositif-client. Ledit concentrateur principal est remarquable en ce qu'il comprend en outre des moyens pour :
- intercepter un paquet de données émis par le dispositif-client à destination d'un correspondant,
- retirer du paquet, le cas échéant, toutes les options à chemins multiples,
- remplacer l'adresse source du paquet par une adresse du concentrateur principal, et
- envoyer le paquet ainsi modifié audit correspondant.

Selon des caractéristiques particulières, ledit concentrateur principal comprend en outre des moyens pour :
- intercepter un paquet de données émis par ledit correspondant à destination dudit dispositif-client,
- insérer, le cas échéant, des options à chemins multiples dans ledit paquet,
ainsi que des moyens pour :
- remplacer l'adresse de destination du paquet par une adresse du dispositif-client, et envoyer le paquet ainsi modifié au dispositif-client, et/ou
- remplacer l'adresse de destination du paquet par l'adresse d'un autre concentrateur, dit concentrateur secondaire, insérer dans le paquet une option mentionnant l'adresse du dispositif-client, et envoyer le paquet ainsi modifié audit concentrateur secondaire.

L'invention concerne aussi, deuxièmement, un concentrateur, dit concentrateur secondaire, situé dans un réseau auquel un dispositif-client donné est connecté, comprenant des moyens pour intercepter les paquets de données émis ou reçus par ledit dispositif-client et pour agréger des connexions exploitant une pluralité de chemins susceptibles d'être utilisés par le dispositif-client. Ledit concentrateur secondaire est remarquable en ce qu'il comprend en outre des moyens, déclenchés suite à l'interception par ledit concentrateur secondaire d'un paquet de données émis par le dispositif-client à destination d'un correspondant, pour :
- retirer du paquet, le cas échéant, toutes les options à chemins multiples, remplacer l'adresse source du paquet par une adresse d'un autre concentrateur, dit concentrateur principal, et envoyer le paquet ainsi modifié audit correspondant, et/ou
- insérer dans le paquet une option mentionnant ladite adresse source du paquet ainsi qu'une option mentionnant l'adresse de destination du paquet, remplacer l'adresse source du paquet par une adresse dudit concentrateur secondaire, remplacer l'adresse de destination du paquet par une adresse dudit concentrateur principal, et envoyer le paquet ainsi modifié au concentrateur principal.

Selon des caractéristiques particulières, ledit concentrateur secondaire comprend en outre des moyens pour :
- recevoir un paquet de données de la part d'un concentrateur principal ou, respectivement, dudit correspondant,
- remplacer l'adresse de destination du paquet reçu par l'adresse du dispositif-client mentionnée dans une option contenue dans le paquet reçu, ou, respectivement, mentionnée dans une table de connexions accessible audit concentrateur secondaire, et
- envoyer le paquet ainsi modifié audit dispositif-client.

Les avantages offerts par ces dispositifs sont essentiellement les mêmes que ceux offerts par les procédés d'émulation d'une connexion à chemins multiples succinctement exposés ci-dessus.

On notera qu'il est possible de réaliser ces divers dispositifs dans le contexte d'instructions logicielles et/ou dans le contexte de circuits électroniques.

Selon un troisième aspect, l'invention concerne un système d'émulation d'une connexion à chemins multiples, comprenant un concentrateur principal tel que décrit succinctement ci-dessus, ainsi qu'au moins un concentrateur secondaire tel que décrit succinctement ci-dessus.

L'invention vise également un programme d'ordinateur téléchargeable depuis un réseau de communications et/ou stocké sur un support lisible par ordinateur et/ou exécutable par un microprocesseur. Ce programme d'ordinateur est remarquable en ce qu'il comprend des instructions pour l'exécution des étapes d'un des procédés d'émulation d'une connexion à chemins multiples succinctement exposés ci-dessus, lorsqu'il est exécuté sur un ordinateur.

Les avantages offerts par ce système, et par ce programme d'ordinateur, sont essentiellement les mêmes que ceux offerts par les procédés d'émulation d'une connexion à chemins multiples succinctement exposés ci-dessus.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1a, mentionnée ci-dessus, représente un terminal T compatible avec MPTCP et connecté à un serveur S via plusieurs réseaux IP,
- la figure 1b, mentionnée ci-dessus, représente un terminal T compatible avec TCP ou MPTCP, et placé derrière un dispositif-relais R compatible avec MPTCP et connecté à un serveur S via plusieurs réseaux IP,
- la figure 2a, mentionnée ci-dessus, représente l'échec d'une tentative de connexion MPTCP dans la configuration de la figure 1a,
- la figure 2b, mentionnée ci-dessus, représente l'échec d'une tentative de connexion MPTCP dans la configuration de la figure 1b,
- les figures 3a, 3b et 3c, mentionnées ci-dessus, illustrent divers types d'architectures associées à des concentrateurs de connexions réseau,
- la figure 4a, mentionnée ci-dessus, représente un terminal T compatible avec MPTCP et connecté à un serveur S compatible avec TCP via *N* concentrateurs de connexions réseau (*P*₁, *P*₂,*...*,*P_{N})* situés dans *m* réseaux d'accès R1, ..., Rm,
- la figure 4b, mentionnée ci-dessus, représente l'échec d'une tentative de connexion MPTCP dans la configuration de la figure 4a,
- la figure 5 représente un agrégat de sous-sessions TCP formant une unique connexion MPTCP,
- la figure 6 représente un exemple de format pour les messages d'annonce envoyés par un concentrateur à d'autres concentrateurs,
- la figure 7 représente un premier exemple de format pour les messages de description de session envoyés par un concentrateur principal à des concentrateurs secondaires,
- la figure 8 représente un deuxième exemple de format pour les messages de description de session envoyés par un concentrateur principal à des concentrateurs secondaires,
- la figure 9 représente une séquence d'échanges de messages selon une première variante, dans laquelle les paquets émis par un terminal et d'abord interceptés par un concentrateur secondaire sont transmis au concentrateur principal,
- la figure 10 représente une séquence d'échanges de messages selon une deuxième variante, dans laquelle les paquets émis par un terminal et d'abord interceptés par un concentrateur secondaire ne sont pas transmis au concentrateur principal,
- la figure 11 représente une option pouvant être utilisée par un dispositif pour indiquer une préférence de répartition de charge pour un chemin donné parmi une pluralité de chemins,
- la figure 12 représente une séquence d'échanges de messages selon une variante dans laquelle les paquets émis par un serveur S sont d'abord interceptés par un concentrateur principal, et
- la figure 13 représente la communication entre un terminal T, compatible avec MPTCP, et un serveur S, compatible avec TCP mais pas avec MPTCP, selon un mode de réalisation de l'invention.

L'invention concerne les chemins de communication utilisables par un dispositif-client, chaque interface respective du dispositif-client étant raccordée à un chemin respectif. Cet ensemble de chemins peut comprendre *tous* les chemins connus du dispositif-client, ou bien seulement une partie d'entre eux.

L'invention s'applique de manière générale à tout protocole régissant les connexions IP à chemins multiples. On va décrire ci-dessous l'application de l'invention au protocole MPTCP, après quelques rappels sur certaines propriétés de ce protocole.

On rappelle tout d'abord que le protocole TCP (initiales des mots anglais *« Transmission Control Protocol* » signifiant « Protocole de Contrôle de Transmission »), défini notamment dans le document RFC 793, est l'un des protocoles principaux utilisés par les terminaux connectés à un réseau IP (par exemple, Internet), de sorte que la littérature évoque souvent la suite de protocoles « TCP/IP ». Le protocole TCP permet d'acheminer de manière fiable, ordonnée et sans erreurs un flux de données numériques entre des applications exécutées sur des terminaux connectés à un réseau local (par exemple, Intranet) ou à l'Internet. Le protocole TCP fonctionne au niveau de la couche transport du modèle OSI. Les navigateurs Web utilisent le protocole TCP lorsqu'ils se connectent à des serveurs distants ; le protocole TCP est aussi utilisé pour acheminer du courrier électronique ou pour transférer des fichiers d'un endroit à un autre. Des protocoles comme HTTP, HTTPS, SMTP, POP3, IMAP, SSH, FTP, Telnet, ainsi que de nombreux autres protocoles sont transportés sur des connexions TCP. Une connexion TCP est identifiée par l'adresse et le numéro de port du terminal source, ainsi que par l'adresse et le numéro de port du terminal de destination.

Deux terminaux peuvent insérer ce que l'on appelle des « options TCP » dans les messages TCP échangés entre eux, afin, par exemple, d'optimiser la qualité de la connexion TCP. De telles options occupent l'espace disponible en fin d'en-tête TCP, et ont une longueur (« *length* » en anglais) exprimée en octets. Le type (« *kind »* en anglais) d'option est un identifiant unique descriptif de la nature de l'option TCP. Par exemple, la valeur « 0 » indique la fin de la liste des options, et la valeur « 2 » indique la taille maximum du segment TCP (« *Maximum Segment Size* », ou MSS en anglais).

L'avènement des terminaux MIF introduit la possibilité d'exploiter les ressources de plusieurs chemins via les réseaux disponibles pour établir une connexion TCP, en utilisant tout ou partie des adresses IP allouées aux différentes interfaces des terminaux MIF. Toutefois, cette possibilité introduit une complexité caractéristique du mode de fonctionnement du protocole TCP : étant donné que les connexions TCP sont associées à une adresse IP et un numéro de port, toute modification d'au moins l'une de ces informations est de nature à pénaliser le fonctionnement de la connexion TCP en cours, et, partant, le service utilisant ladite connexion TCP. Ce changement est particulièrement préjudiciable lorsque le terminal se voit attribuer une nouvelle adresse IP, ou lorsque le terminal se connecte à un autre réseau, ou encore lorsque l'interface à laquelle l'adresse IP est associée n'est plus disponible. Par exemple, des moyens pour informer un correspondant TCP distant qu'une adresse IP n'est plus valide sont alors nécessaires pour assurer le maintien d'une connexion existante sans interrompre les services offerts par cette connexion TCP.

Le groupe de travail « mptcp » de l'IETF a été missionné en 2009 pour spécifier des extensions du protocole TCP capables de s'accommoder des contraintes imposées par la possibilité d'affecter plusieurs adresses IP aux différentes interfaces logiques ou physiques d'un terminal. Ce groupe de travail a publié les premières spécifications du protocole MPTCP (cf. A. Ford, C. Raiciu et M. Handley, « TCP Extensions for Multipath Operation with Multiple Addresses », RFC 6824, janvier 2013) - que certains téléphones « intelligents » et certains systèmes d'exploitation sont d'ailleurs déjà capables de mettre en œuvre. Le protocole MPTCP répond en particulier au besoin d'assurer une continuité de session IP en cas de mobilité du terminal. L'IETF envisage de faire progresser le statut des spécifications MPTCP actuelles, pour en faire de véritables normes au sens de l'IETF.

Le protocole MPTCP a donc été proposé pour minimiser les risques de rupture intempestive d'une connexion TCP, liés par exemple à de telles modifications d'adressage, et plus généralement pour répondre aux exigences posées par un contexte où un terminal a la capacité de se raccorder à un ou plusieurs réseaux via une ou plusieurs interfaces. En outre, il est prévu dans le document RFC 6824 qu'en cas d'échec d'une tentative d'établissement d'une connexion MPTCP, la connexion bascule automatiquement sur une connexion TCP simple.

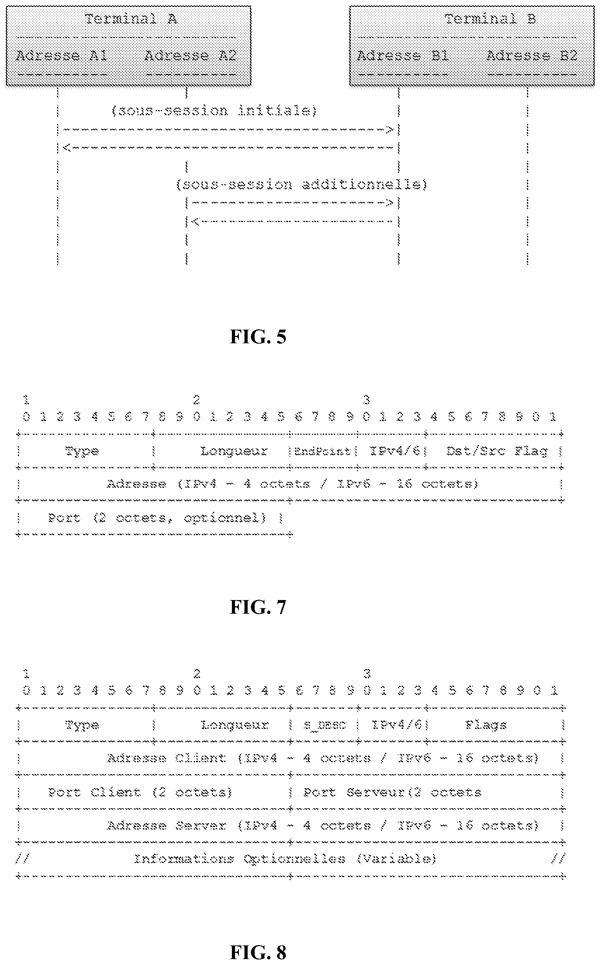

Dans le cadre du protocole MPTCP, on appelle « sous-session » (« *sub-flow* » en anglais) une connexion TCP reposant sur l'utilisation de l'un des couples (adresse IP, numéro de port) disponibles. De ce fait, une connexion MPTCP est un agrégat de sous-sessions TCP. A titre d'exemple, la **figure 5** montre une connexion MPTCP entre un terminal A et un terminal B ; la sous-session initiale est établie entre l'adresse A1 du terminal A et l'adresse B1 du terminal B ; ultérieurement, une sous-session additionnelle est établie entre l'adresse A2 du terminal A et l'adresse B1 du terminal B. Un terminal MIF peut ainsi se connecter à de nouveaux réseaux, ou se détacher de certains des réseaux, tout en maintenant une même connexion à chemins multiples.

Un exemple particulièrement avantageux d'application du protocole MPTCP est le transfert de fichiers volumineux utilisant les ressources du protocole FTP (File Transfer Protocol). Un dispositif agissant en tant que dispositif-client FTP peut dynamiquement exploiter l'ensemble des chemins disponibles qui lui permettent d'accéder à un serveur FTP, pourvu que ce dernier soit apte à mettre en œuvre les différentes connexions MPTCP établies par le dispositif-client FTP. Le temps de transfert des données est ainsi significativement réduit par rapport à une connexion TCP.

Différents cas d'usage peuvent être envisagés pour le protocole MPTCP, tels que :
- échanger des données entre plusieurs réseaux d'accès sans-fil,
- réduire la charge d'un réseau mobile, en basculant une partie du trafic vers un réseau d'accès sans-fil,
- optimiser l'utilisation des ressources réseau en exploitant de manière simultanée les ressources de plusieurs liens d'accès et en répartissant la charge de trafic d'une ou plusieurs connexions MPTCP sur ces différents liens, ce qui permet d'augmenter significativement la bande passante associée à l'établissement d'une connexion MPTCP, et
- fiabiliser une connexion MPTCP en basculant le trafic acheminé le long d'un chemin primaire vers un chemin de secours en cas de rupture du chemin primaire, et ce, de manière transparente pour l'utilisateur (c'est-à-dire sans interruption de service).

Les systèmes d'exploitation présentent aux applications des interfaces de programmation dédiées, appelées API (*Application Programming Interface*) pour interagir avec les couches TCP et IP. L'API classique présentée aux applications TCP/IP est l'interface *« socket ».* L'interface *« socket »* est caractérisée par plusieurs attributs, tels que « *Local Socket Address* », « *Remote Socket Address* » et « *Protocol* ». Des extensions de l'API TCP/IP, appelées API MPTCP, ont été spécifiées par l'IETF dans le document RFC 6897 pour permettre aux applications de contrôler les connexions MPTCP.

Une connexion MPTCP est initialisée comme n'importe quelle connexion TCP classique, à l'exception du fait qu'une option TCP appelée MP_CAPABLE (signifiant que le terminal émetteur est compatible avec les extensions MPTCP) est incluse dans le message contenant le drapeau d'initialisation de connexion (SYN) et dans les messages ultérieurs. Un terminal MPTCP peut signaler au terminal distant la disponibilité d'une adresse IP supplémentaire à l'aide d'une option TCP appelée ADD_ADDR, sans nécessairement créer de sous-session associée.

La signalisation de plusieurs adresses IP disponibles et susceptibles d'être utilisées pour communiquer avec un correspondant peut conduire à l'échec de l'établissement de certaines sous-sessions TCP, parce que les adresses IP externes telles que perçues par les terminaux distants peuvent ne pas être les mêmes que celles visibles localement. Pour cette raison, l'option ADD_ADDR du protocole MPTCP comprend un identificateur d'adresse, appelé « Address ID », utilisé pour identifier sans ambiguïté une adresse IP disponible. Cette disposition est censée éviter les problèmes induits par la présence d'un NAT sur le chemin suivi par les paquets entre les deux terminaux qui ont établi une connexion MPTCP. L'option ADD_ADDR est également utilisée pour transmettre un numéro de port dans le cas où l'un des terminaux MPTCP n'utilise pas le même numéro de port pour l'ensemble des adresses IP disponibles.

De même, le protocole MPTCP prévoit des dispositions qui sont censées permettre, notamment, la traversée de pare-feux (« *firewall* » en anglais). Plus précisément, la spécification du protocole MPTCP stipule que les numéros de séquence tels qu'indiqués dans l'en-tête TCP sont spécifiques à chaque sous-session, tandis que le numéro de séquence indiqué dans l'option DSS (« *Data Sequence Signal* ») du protocole MPTCP sert à associer ces sous-sessions à la même connexion MPTCP.

Le protocole MPTCP entend ainsi s'affranchir des contraintes imposées par la prolifération massive de « *middle boxes* » (fonctions intermédiaires dans une chaîne de communication), comme les NAT et les pare-feux déployés dans les réseaux actuels.

Le protocole MPTCP utilise notamment les options TCP suivantes :
- MP_CAPABLE : cette option, mentionnée ci-dessus, est utilisée pour signaler au terminal distant que le terminal émetteur est compatible avec les options MPTCP ;
- ADD_ADDR : cette option, mentionnée ci-dessus, est utilisée pour ajouter une nouvelle adresse ; elle comprend un champ optionnel de deux octets permettant de fournir également un numéro de port, le cas échéant ;
- REMOVE_ADDR : cette option est utilisée pour supprimer une adresse ;
- MP_PRIO : cette option est utilisée pour modifier la priorité d'une connexion ;
- MP_JOIN : cette option est utilisée pour identifier la connexion TCP qui est associée à l'établissement d'une nouvelle sous-session ;
- MP_FAIL : cette option est utilisée pour revenir au mode TCP sans options MPTCP ; et
- MP_FASTCLOSE : cette option est utilisée pour clôturer rapidement une connexion MPTCP.

Le protocole MPTCP peut être activé selon plusieurs modes :
- *mode natif* : deux terminaux MPTCP établissent toutes les sous-sessions qui correspondent aux numéros des adresses/ports disponibles, et utilisent l'ensemble de ces sous-sessions ;
- *mode primaire* : deux terminaux MPTCP signalent des sous-sessions, mais seul un sous-ensemble de ces sous-sessions est effectivement utilisé pour le transfert de données ;
- *mode secondaire* : en cas d'indisponibilité (ou de surcharge) du sous-ensemble « primaire » de sous-sessions, un sous-ensemble « secondaire » de sous-sessions est alors sollicité pour assurer la continuité de la connexion MPTCP ; et
- *mode repli* : deux terminaux MPTCP utilisent une sous-session unique ; en cas de panne, le trafic est basculé vers une nouvelle sous-session créée à cet effet.

On va décrire à présent un mode de réalisation du procédé d'émulation d'une connexion à chemins multiples selon l'invention.

Afin de s'affranchir de la complexité inhérente aux schémas d'encapsulation, le présent mode de réalisation propose l'utilisation d'options TCP ou IP (les options IP sont des champs optionnels, décrits dans le document RFC 791 de l'IETF, que l'on peut inclure dans un paquet IPv4) pour des communications de différentes natures, y compris celles qui ne reposent pas sur un protocole de transport particulier, ou celles reposant sur le protocole UDP.

Toutefois, la description suivante reflète, à des fins purement illustratives, une application du présent mode de réalisation au protocole MPTCP.

On notera que d'autres moyens pour encoder les informations contenues dans les options TCP définies ci-après peuvent être considérés, en fonction du mode de communication activé entre les concentrateurs. Le terme « option » est également utilisé pour désigner, par exemple, un en-tête d'extension (« Extension Header » en anglais) IPv6, une option IPv4, le ou les champs « adresse source/numéro de port source » d'un paquet encapsulé, le ou les champs « adresse de destination/numéro de port de destination » d'un paquet encapsulé, un ou plusieurs champs d'un paquet encapsulé, un ou plusieurs champs d'un paquet qui encapsule un paquet d'origine, ou une extension d'un schéma d'encapsulation, aussi bien qu'une option du protocole TCP ou d'un autre protocole de transport, ou bien encore une combinaison de ces différents moyens.

### Découverte des autres concentrateurs de connexions servant un dispositif-client ou un groupe de dispositifs-clients

Cette procédure a pour but de permettre à chaque groupe de concentrateurs susceptibles de servir le même dispositif-client ou le même groupe de dispositif-clients, d'acquérir dynamiquement les adresses des autres concentrateurs du groupe.

On notera qu'un concentrateur peut appartenir à un ou plusieurs groupes. On notera également que l'adresse IP utilisée pour joindre un premier concentrateur depuis un deuxième concentrateur du groupe n'est pas nécessairement l'adresse utilisée par ce premier concentrateur pour recevoir un paquet émis par un dispositif-client, ni celle utilisée (c'est-à-dire, l'adresse externe) par ce premier concentrateur pour émettre un paquet obtenu à partir d'un paquet en provenance d'un dispositif-client.

Evidemment, si aucun autre concentrateur n'a été découvert, cette procédure n'est pas mise en œuvre. Elle sera activée immédiatement après découverte d'un nouveau concentrateur.

Selon une première variante, cette procédure est réalisée par une simple opération de configuration sur lesdits concentrateurs.

Selon une deuxième variante, on configure un alias de service sur chaque concentrateur. L'alias peut être structuré sous la forme d'un nom de domaine, ou d'enregistrement de service (« *Service record* » en anglais) SRV (selon le document RFC 2782, un enregistrement SRV est un ensemble d'informations du système DNS spécifiant la localisation, c'est-à-dire le nom de machine et le numéro de port, de serveurs offrant des services donnés), ou de tout autre format adapté, par exemple « Concentrateur_Rennes », « Concentrateur_France_Telecom », « Concentrateur_HybridAccess », ou « proxy_group_1 ». L'alias peut aussi être structuré comme une adresse IP (IPv4, IPv6, ou les deux). De préférence, chaque concentrateur contacte lors de son démarrage et à fréquence régulière un service de résolution d'alias (par exemple, un service DNS) pour récupérer la liste des adresses IP du groupe de concentrateurs auquel il appartient.

Selon une troisième variante, on exploite les ressources d'un protocole de routage dynamique tel que OSPF (Open Shortest Path First), IS-IS (Intermediate Système to Intermediate System Routing Protocol), ou BGP (Border Gateway Protocol). Par exemple, chaque concentrateur annonce via un message dédié l'alias d'un groupe de concentrateurs, ou les alias des groupes de concentrateurs auxquels il appartient, ainsi que l'adresse pour le joindre (par exemple, une adresse IPv4 ou IPv6).

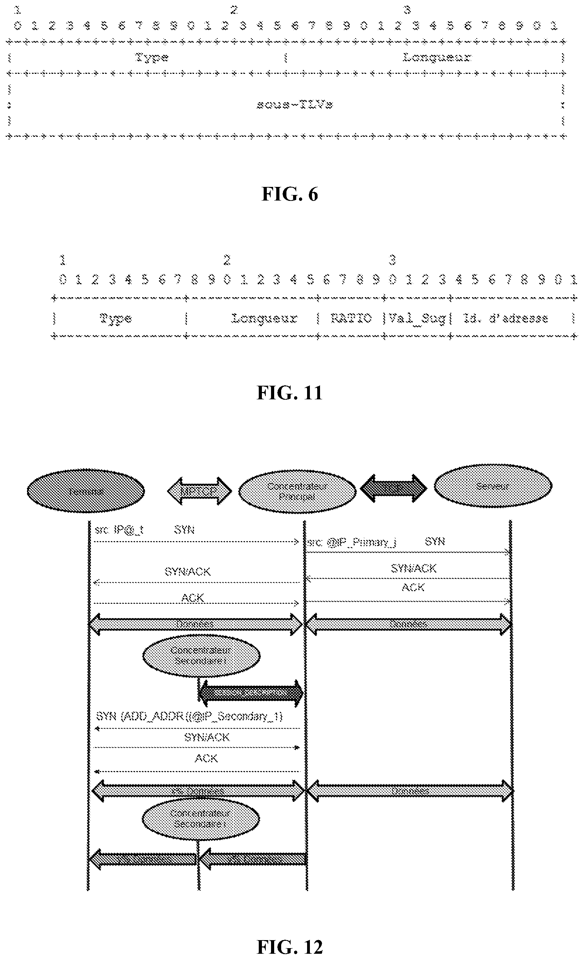

Comme illustré sur la **figure 6**, ce message peut par exemple être un message spécifique encodé selon le mode TLV (Type, Longueur, Valeur), dans lequel le Type doit être assigné par l'IANA (Internet Assigned Numbers Authority), la Longueur est variable, et la Valeur comprend les sous-TLV (« *sub-TLV* » en anglais) suivants :

| Type de sous-TLV | Longueur | Nom |
|---|---|---|
| 1 | variable | ALIAS sub-TLV |
| 2 | variable | ADDRESS sub-TLV |

Plusieurs sous-TLV « ADDRESS sub-TLV » peuvent être présents si plusieurs adresses sont connues pour un même alias. D'autres sous-TLV peuvent être définis.

Suite à la réception de ce message, les autres concentrateurs gardent en mémoire la liste des adresses IP des concentrateurs (telles que renseignées dans un sous-TLV « ADDRESS sub-TLV ») avec lesquels ils ont un alias en commun.

On notera que les trois variantes décrites ci-dessus peuvent être combinées.

### Authentification des concentrateurs de connexions

Afin d'éviter l'interception de sessions actives (interception illégitime du trafic), une procédure d'authentification entre les concentrateurs du même groupe peut avantageusement être mise en place.

L'authentification peut être réalisée en utilisant les ressources d'un protocole tel que « Extensible Authentication Protocol » (EAP, RFC 3748 (https://tools.ietf.org/html/rfc3748)), ou de tout autre protocole, tel que EAP-TTLS (RFC 5281, https://tools.ietf.org/html/rfc5281), EAP-TLS (RFC 5216, https://tools.ietf.org/html/rfc5216), ou EAP-Mutual Cryptographic Binding (RFC 7029, https://tools.ietf.org/html/rfc7029).

On peut par exemple configurer au préalable au moins une clé de sécurité pour chaque concentrateur. Cette clé est utilisée pour produire un condensé de sécurité (« *hash* » en anglais) envoyé aux autres concentrateurs, mais aussi pour authentifier d'autres concentrateurs. Toute anomalie détectée lors de la procédure d'authentification d'un concentrateur entraîne un rejet des messages en provenance du concentrateur concerné.

Plus précisément, diverses variantes peuvent être envisagées. Par exemple :
- authentification mutuelle globale : cette procédure est activée une seule fois par les concentrateurs : suite à la phase de découverte des autres concentrateurs, un concentrateur initialise une phase d'authentification pour s'authentifier lui-même auprès des autres concentrateurs, et authentifier lesdits concentrateurs ainsi découverts ; cette phase d'authentification est initialisée à chaque découverte d'un nouveau concentrateur appartenant à un même groupe ; en cas de conflit entre deux sessions d'authentification simultanées initialisées par deux concentrateurs, ces deux concentrateurs ne maintiendront de préférence que la session ayant été initialisée en premier ;
- authentification mutuelle par connexion : contrairement au mode d'authentification globale, la procédure d'authentification est réitérée à chaque demande de création de contexte dans un concentrateur secondaire ;
- authentification avec une entité de confiance : ce mode suppose que les concentrateurs s'authentifient auprès d'une entité de confiance ; pour authentifier d'autres concentrateurs appartenant au même groupe, un concentrateur contacte l'entité de confiance.

Une ou plusieurs sessions peuvent être nécessaires pour cette authentification mutuelle.

### Echange des adresses externes allouées (ainsi que d'autres informations) par chaque concentrateur de connexions

Deux concentrateurs s'étant authentifiés mutuellement procèdent à l'échange d'informations, telles que leurs adresses externes, leurs politiques de distribution de charges, les profils des dispositif-clients, l'utilisation des ressources, identifiants de chemins, de routes, ou d'interfaces vers un dispositif-client, les politiques locales. Les concentrateurs peuvent aussi échanger le mode de sélection du concentrateur principal à activer, l'utilisation d'une même adresse externe par tous les concentrateurs, et ainsi de suite.

L'échange d'informations entre les concentrateurs peut aussi avoir lieu pendant la durée de vie d'une connexion. Particulièrement, le concentrateur principal peut instruire un concentrateur secondaire afin de modifier la politique de répartition de charge.

Les concentrateurs d'un même groupe peuvent en outre échanger des informations comme, par exemple, la qualité du réseau local, le nombre de connexions actives, ou la bande passante disponible. D'autres messages de contrôle peuvent être utilisés (par exemple, basculement sur le mode TCP simple pour certains flux).

Pour cet échange d'informations, les concentrateurs peuvent activer un mode sécurisé, par exemple en incluant le condensé de sécurité mentionné ci-dessus dans tous les messages émis vers un autre concentrateur. Toute anomalie détectée lors de la mise en œuvre de ce mode sécurisé entraîne un rejet des messages en provenance du concentrateur concerné.

Un concentrateur peut maintenir une matrice qui renseigne le temps qu'il lui a fallu pour joindre chacun des autres concentrateurs du groupe. Cette information peut être utilisée pour la prise de décision d'impliquer un ou plusieurs concentrateurs secondaires dans une même connexion. Les concentrateurs qui peuvent induire une distorsion de qualité peuvent alors être exclus d'une connexion.

### Trafic issu d'un dispositif-client

On suppose qu'un dispositif-client, par exemple un terminal T, compatible avec les communications à chemins multiples détermine un ensemble (*P*₁*, P*₂,*..., P_{N})* de *N* concentrateurs (par exemple, une liste de relais MPTCP) situés dans au moins un réseau auquel le terminal T est connecté. Cette détermination peut faire suite à une configuration statique du terminal T, ou bien à une procédure d'identification dynamique ou de découverte dynamique.

Le terminal T initialise une connexion à chemins multiples avec un serveur S, et envoie un premier paquet de données via un premier chemin. La présente invention n'impose aucune limitation quant aux critères de sélection d'un premier chemin.

Ce premier paquet est alors intercepté par un concentrateur sur ledit premier chemin. Suite à la réception de ce paquet, le concentrateur vérifie si un contexte associé à ce paquet est déjà présent dans sa « table de connexions ». La table de connexions contient l'ensemble des informations caractéristiques des connexions à chemins multiples (sous-sessions comprises) dans lesquelles ce concentrateur est présentement impliqué (connexions « actives ») et/ou qui ont été enregistrées par un concentrateur principal dans la table de connexions d'un concentrateur secondaire ; ces informations comprennent notamment les adresses et numéros de port, ainsi que d'autres informations comme le ratio de partage de charge, ou le statut « principal » ou « secondaire » de ce concentrateur.

Si le concentrateur ne trouve aucun contexte, il se déclare alors « concentrateur principal » pour cette connexion. Il renseigne un attribut dans sa table de connexions pour sauvegarder cette information.

Il est clair que d'autres modes de détermination du concentrateur principal sont possibles. En voici quelques exemples :
- *sélection sur la base de l'adresse de destination du paquet* : par exemple, un premier concentrateur est configuré en tant que concentrateur principal pour joindre à partir de la France les serveurs localisés en France, alors qu'un deuxième concentrateur est configuré en tant que concentrateur principal pour joindre à partir de la France les serveurs localisés en Europe hors France ; si ce mode est activé, un concentrateur peut être le premier à recevoir un paquet au titre d'une connexion à chemins multiples, mais ce n'est pas pour autant qu'il agit en tant que concentrateur principal pour ladite connexion ; en pratique, sur réception d'un paquet par un concentrateur, ce dernier vérifie s'il maintient un contexte qui correspond à ce paquet ; si un contexte est trouvé, alors le concentrateur procède au traitement de ce paquet selon les consignes de la table de connexions ; si aucun contexte n'est trouvé, alors le concentrateur vérifie, compte tenu de l'adresse de destination de ce paquet, si le paquet doit être traité localement ou doit être relayé vers un autre concentrateur (qui agira en tant que concentrateur principal pour cette connexion) ; une variante de ce mode consiste à utiliser un système de routage sur la base du Système Autonome (« *Autonomous System* », ou AS en anglais) pour la prise de décision ; par exemple, le concentrateur principal pour une connexion est celui qui est associé au même AS que le serveur S, ou celui qui présente un nombre minimum de sauts d'AS pour joindre l'adresse de destination ;
- *sélection sur la base de la disponibilité d'une route pour joindre le serveur S* : à cause des politiques de routage inter-domaines, certains serveurs ne sont pas joignables depuis certains réseaux ; ce mode de sélection du concentrateur principal permet d'éviter ce problème en favorisant le concentrateur qui garantit un chemin de route opérationnel ; on suppose ici que les concentrateurs ne possèdent pas la même table de routage ; en pratique, sur réception d'un paquet, un concentrateur vérifie s'il maintient un contexte qui correspond à ce paquet ; si un contexte est trouvé, alors le concentrateur procède au traitement de ce paquet selon les consignes de la table de connexions ; si aucun contexte n'est trouvé, alors le concentrateur vérifie si une route pour joindre l'adresse de destination est disponible localement ; si c'est le cas, le paquet est traité localement, sinon le paquet est relayé vers un autre concentrateur (qui agira en tant que concentrateur principal pour cette connexion) ;
- *sélection sur la base de la Qualité de Service pour joindre le serveur S* : dans ce mode, on choisit comme concentrateur principal le concentrateur qui optimise la Qualité de Service vers le serveur S ; des mécanismes comme celui décrit dans le document « draft-ietf-idr-performance-routing » de l'IETF peuvent être utilisés pour faciliter l'échange d'informations de Qualité de Service ; on suppose ici que les concentrateurs activent un mécanisme similaire pour collecter au moins une métrique de performance pour joindre une destination donnée ; ce mode permet de choisir, pour une adresse donnée du serveur S, le concentrateur qui optimise ladite métrique de performance pour atteindre cette adresse ; en pratique, sur réception d'un paquet, un concentrateur vérifie s'il maintient un contexte qui correspond à ce paquet ; si un contexte est trouvé, alors le concentrateur procède au traitement de ce paquet selon les consignes de la table de connexions ; si aucun contexte n'est trouvé, alors le concentrateur vérifie s'il est celui qui optimise la métrique de performance pour atteindre l'adresse du serveur S ; si c'est le cas, le paquet est traité localement, sinon le paquet est relayé vers le concentrateur qui optimise ladite métrique (qui agira en tant que concentrateur principal pour cette connexion) ; l'activation de ce mode, en combinaison avec la sélection du concentrateur offrant la meilleure Qualité de Service sur le segment de réseau compris entre le dispositif-client et les concentrateurs, permet d'optimiser la Qualité de Service de bout en bout (c'est-à-dire, entre le terminal T et le serveur S).

On notera qu'un concentrateur peut agir en tant que « concentrateur principal » pour certaines connexions, et en tant que « concentrateur secondaire » pour d'autres connexions.

Par ailleurs, pour appliquer de manière dynamique certaines contraintes d'ingénierie de trafic, on peut prévoir qu'un concentrateur agisse en tant que :
- concentrateur principal pour l'ensemble des connexions de tous les terminaux si une panne d'un autre concentrateur a été détectée, ou
- concentrateur principal pour toutes les connexions d'un terminal donné, pour satisfaire certaines contraintes réglementaires comme l'interception légale.
De plus, toujours dans le but d'appliquer de manière dynamique les politiques d'ingénierie de trafic, des concentrateurs peuvent avantageusement utiliser des mécanismes de configuration dynamique tels que Diameter, Common Open Policy Service (COPS) ou NETCONF.

Une fois le concentrateur principal déterminé, celui-ci envoie un message vers le, ou les autres concentrateurs pour les informer du nouveau contexte de session, et, aussi, pour leur communiquer des informations relatives à la connexion. Pour ce faire, il peut par exemple utiliser une option SESSION_DESCRIPTOR.

Selon une première variante, illustrée sur la **figure 7**, l'option SESSION_DESCRIPTOR est structurée sous la forme d'un « *container* » décrivant la session en cours (un *container* est une structure permettant de regrouper l'ensemble des informations caractéristiques et descriptives d'une session en cours, ce qui évite de devoir manipuler tout un ensemble d'options distinctes, chacune étant descriptive d'une et une seule information caractéristique d'une session en cours). Cette option SESSION_DESCRIPTOR indique au moins l'adresse du terminal T et l'adresse du serveur S. L'adresse du terminal T et celle du serveur S peuvent être codées dans une option « EndPoint ». Il est précisé s'il s'agit d'une adresse IPv4 ou IPv6. L'attribut « Dst/Src Flag » indique si l'option transporte l'adresse source ou l'adresse de destination.

Selon une deuxième variante, illustrée sur la **figure 8**, l'option SESSION_DESCRIPTOR est structurée sous la forme d'une option dédiée. L'option SESSION_DESCRIPTOR indique l'adresse du terminal T et celle du serveur S. L'attribut « Flags » est utilisé pour d'éventuels besoins futurs, tels que l'indication du type d'informations optionnelles (« *Information Eléments* » en anglais) incluses dans l'option. L'option SESSION_DESCRIPTOR peut notamment inclure l'adresse externe et le numéro de port qui sont utilisés par le concentrateur principal pour cette connexion. Cette adresse et ce numéro de port doivent être utilisés tout au long de la connexion, sinon le serveur S rejettera les paquets. Un condensé de sécurité peut être inclus dans cette option.

Le concentrateur principal remplace l'adresse source du paquet reçu par l'une de ses adresses, retire toutes les options MPTCP, puis envoie le paquet vers le prochain saut. Le numéro de port peut aussi être modifié par le concentrateur.

On notera que le concentrateur principal n'est pas tenu de respecter une chronologie particulière en ce qui concerne l'étape d'envoi de l'option SESSION_DESCRIPTOR, et l'étape de modification du paquet de données décrites ci-dessus.

Lors de l'établissement d'une connexion à chemins multiples, un concentrateur principal annonce, notamment aux dispositif-clients, en plus de ses propres adresses (@IP_Primary_j), les adresses des autres concentrateurs secondaires (@IP_Secondary_i). Ce faisant, le concentrateur principal se comporte comme si ces adresses (@IP_Secondary_i) lui étaient configurées localement. Cette opération permet de préparer le dispositif-client (ainsi qu'un éventuel pare-feu intermédiaire) à recevoir du trafic de la part d'au moins un concentrateur secondaire, sans que le terminal n'ait préalablement émis aucun paquet à destination de ce concentrateur secondaire. En effet, en l'absence de cette opération d'annonce, les paquets acheminés par un concentrateur secondaire vers le terminal seraient rejetés par le dispositif-client ou par le pare-feu intermédiaire. Le concentrateur principal peut annoncer toutes les adresses, ou seulement une partie des adresses des concentrateurs secondaires. Un critère de sélection peut être par exemple la charge des concentrateurs ou la qualité d'un réseau d'accès.

Le concentrateur principal peut annoncer les adresses des autres concentrateurs secondaires (@IP_Secondary_i) dans un seul message, ou à l'aide de messages différents. Selon la procédure de gestion d'une connexion à chemins multiples choisie, le concentrateur principal pourra annoncer les adresses des concentrateurs secondaires (@IP_Secondary_i) lors de l'établissement de la première sous-session, ou ultérieurement.

Le terminal T peut envoyer les paquets suivants via le même chemin ou via des chemins différents. Ces paquets sont interceptés par des concentrateurs, qui mettent alors en œuvre les étapes suivantes.

Le concentrateur extrait les informations de session (incluant adresse de destination, numéro de port de destination, adresse IP source et numéro de port source). Ensuite, il vérifie dans sa table de connexions si un contexte est déjà présent pour cette session.

Si aucun contexte n'a été trouvé, il exécute alors la procédure, décrite ci-dessus, déclenchée par la réception d'un premier paquet.

Si un contexte associé à cette session est déjà présent, le concentrateur vérifie si, pour cette connexion, il est censé agir en tant que concentrateur principal ou en tant que concentrateur secondaire (ce qu'indique explicitement le contexte consulté par le concentrateur).

S'il est le concentrateur principal de cette connexion, alors le concentrateur exécute la procédure de modification du paquet, et d'envoi du paquet modifié, décrite ci-dessus. Il doit utiliser la même adresse externe et le même numéro de port que ceux déjà utilisés pour traiter le premier paquet de cette connexion. Ces informations sont conservées dans la table de connexions.

S'il est un concentrateur secondaire pour cette connexion, alors il se comporte selon l'une des variantes suivantes.

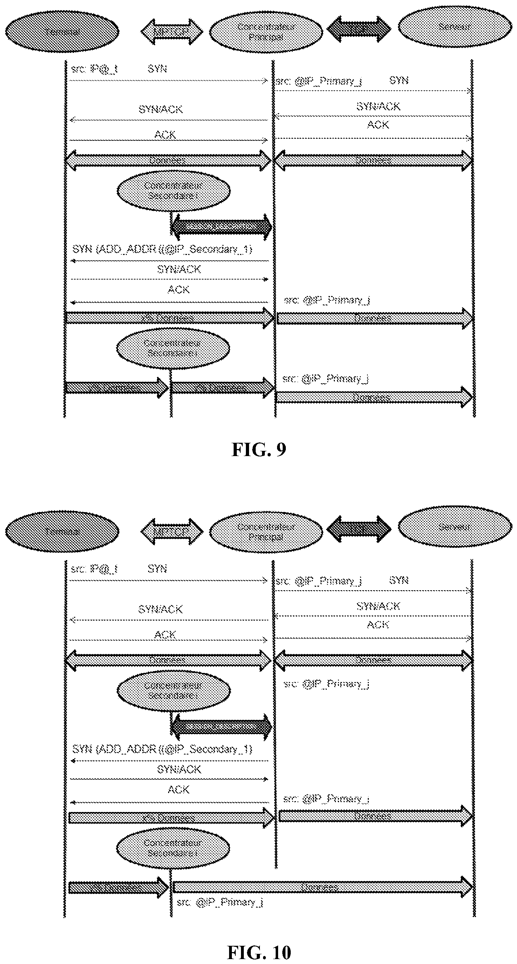

Selon une première variante, le concentrateur secondaire relaie les paquets reçus vers le concentrateur principal. Plus précisément, le concentrateur secondaire remplace l'adresse source de chaque paquet reçu par l'une de ses adresses, remplace l'adresse de destination du paquet par une adresse du concentrateur principal, puis envoie le paquet vers le concentrateur principal de la connexion. Le concentrateur doit inclure deux options « EndPoint », l'une incluant l'adresse du serveur de destination, et l'autre transportant l'adresse du dispositif-client. La **figure 9** représente, à titre d'exemple, une séquence d'échanges de messages dans le cadre de cette première variante.

Selon une deuxième variante, le concentrateur secondaire traite les paquets reçus localement *sans* les relayer vers le concentrateur principal. Le concentrateur secondaire exécute la procédure de modification du paquet, et d'envoi du paquet modifié, décrite ci-dessus. Il doit utiliser la même adresse externe et le même numéro de port que ceux déjà utilisés par le concentrateur principal pour traiter le premier paquet de cette connexion. Ces informations sont conservées dans la table de connexions. La **figure 10** illustre, à titre d'exemple, une séquence d'échanges de messages dans le cadre de cette deuxième variante.

Quelle que soit la variante, le terminal T peut répartir le trafic sortant entre le concentrateur principal et le, ou les concentrateurs secondaires (comme indiqué par les pourcentages x% et y% sur les figures 9 et 10). La politique de distribution de trafic peut être locale au terminal, ou suggérée par le concentrateur principal, par exemple à l'aide de l'option « RATIO » représentée sur la **figure 11** ; cette option « RATIO » est utilisée par un dispositif pour indiquer une préférence de répartition de charge pour un chemin donné parmi une pluralité de chemins. Sur cette figure 11, « Val_Sug » désigne une valeur suggérée de répartition de charge, et « Id. d'adresse » désigne un identifiant de l'adresse de l'interface du terminal T associée.

### Trafic à destination d'un dispositif-client

Les dispositions décrites ci-dessus assurent que les paquets reçus par le serveur S de la part du terminal T présentent tous la même adresse source (ladite adresse externe), à savoir l'adresse du concentrateur principal associée à cette connexion. Par conséquent, lorsque le serveur S émet en retour des paquets de données sur cette connexion, il utilise cette adresse externe en tant qu'adresse de destination de ces paquets.

Le concentrateur principal a la connaissance de la manière dont les différents chemins sont exploités. Le concentrateur principal est aussi, de préférence, responsable de la distribution du trafic entre les différents chemins (c'est-à-dire, de la répartition du trafic entre les différents concentrateurs secondaires impliqués dans ladite connexion).

Selon une première variante, les paquets émis par le serveur S sont d'abord interceptés par le concentrateur principal.

Le concentrateur principal peut décider d'envoyer tout ou partie du trafic via d'autres concentrateurs secondaires. Pour ce faire, le concentrateur principal applique une politique de distribution de trafic entre les divers chemins disponibles.

Si le paquet doit être transmis directement au terminal T via l'un des chemins multiples placé sous la responsabilité de gestion du concentrateur principal, alors le concentrateur principal transforme la connexion en une connexion MPTCP ; plus particulièrement, il remplace l'adresse de destination et le numéro de port de destination par l'adresse du terminal T (ces informations sont conservées dans la table de connexions). Puis il envoie le paquet ainsi modifié au dispositif-client.

Si le paquet doit être envoyé via un autre chemin, géré par un concentrateur secondaire, le concentrateur principal remplace l'adresse et le numéro de port de destination du paquet par l'adresse du concentrateur secondaire, mais insère également l'option « EndPoint » avec l'attribut « Flag » valorisé à « Destination ». Ensuite, le paquet ainsi modifié est envoyé vers ledit concentrateur secondaire. Suite à la réception de ce paquet par le concentrateur secondaire, celui-ci remplace l'adresse de destination par celle contenue dans l'option « EndPoint », puis transmet le paquet vers le prochain saut. Le paquet sera alors reçu par le terminal T.

La **figure 12** représente, à titre d'exemple, une séquence d'échanges de messages dans le cadre de cette première variante ; cette figure illustre notamment la mise en œuvre d'une politique de répartition de charge de trafic. On notera que la chronologie des échanges de cette figure n'est fournie que pour des besoins d'illustration, et qu'une autre chronologie des évènements peut être observée.

Selon une deuxième variante, les paquets émis par le serveur S sont interceptés par un concentrateur secondaire ; cela est possible si les tables de routage contiennent un chemin permettant d'atteindre l'adresse externe et passant par ce concentrateur secondaire. Dans ce cas, ce concentrateur secondaire peut, après réception d'un paquet :
- transmettre le paquet directement au terminal T, après avoir remplacé l'adresse de destination et le numéro de port de destination par l'adresse du terminal T (ces informations sont conservées dans la table de connexions), ou
- rediriger tout ou partie de ce trafic vers le concentrateur principal, ou encore
- rediriger tout ou partie de ce trafic vers d'autres concentrateurs secondaires afin d'augmenter la bande passante offerte au terminal T.
La politique de répartition de charge peut par exemple être configurée localement sur chaque concentrateur, et peut être appliquée selon des informations disponibles localement ou en fonction d'informations remontées par les dispositifs-clients ou par au moins un autre concentrateur (notamment, le concentrateur principal).

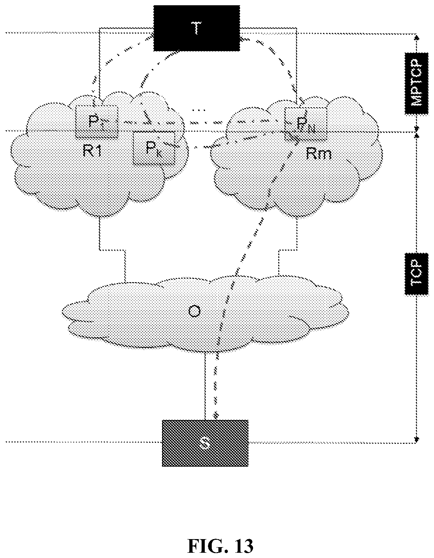

En conclusion, la mise en œuvre du présent mode de réalisation de l'invention est représentée sur la **figure 13****.** Sur la figure 13, *P_{N}* est le concentrateur principal alors que *P₁* et *Pₖ* sont des concentrateurs secondaires pour cette connexion. Grâce à l'invention, le terminal T, qui est compatible avec MPTCP, peut communiquer avec le serveur S, qui est compatible avec TCP mais pas avec MPTCP ; le terminal T peut ainsi, par exemple, bénéficier de débits de téléchargement (« *download »* en anglais) et d'envoi (« *upload* » en anglais) plus importants.

L'invention peut être mise en œuvre au sein de noeuds de réseaux de communication, par exemple des concentrateurs de connexions réseau, au moyen de composants logiciels et/ou matériels. La fonction de concentrateur peut être hébergée dans un centre de traitement de données (« *datacenter »* en anglais) ou embarquée dans un équipement du réseau de transport. La fonction de concentrateur peut aussi être une instance virtuelle.

Lesdits composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés d'émulation d'une connexion à chemins multiples selon l'invention.

En effet, l'invention vise aussi un programme d'ordinateur tel que décrit succinctement ci-dessus. Ce programme d'ordinateur peut être stocké sur un support lisible par ordinateur et peut être exécutable par un microprocesseur. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations inamovible, ou partiellement ou totalement amovible, comportant des instructions d'un programme d'ordinateur tel que décrit succinctement ci-dessus.

Ce support d'informations peut être n'importe quelle entité ou dispositif capable de stocker le programme. Par exemple, le support d'informations peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau tel que l'Internet.

En variante, le support d'informations peut être un circuit intégré dans lequel le programme est incorporé, le circuit étant adapté pour exécuter ou pour être utilisé dans l'exécution de l'un quelconque des procédés d'émulation d'une connexion à chemins multiples selon l'invention.

## Revendications

1. Procédé d'émulation d'une connexion à chemins multiples, dans lequel les paquets de données émis ou reçus par un dispositif-client donné sont interceptés par une pluralité de concentrateurs situés dans au moins un réseau auquel ledit dispositif-client est connecté, chaque concentrateur permettant d'agréger des connexions exploitant une pluralité de chemins susceptibles d'être utilisés par le dispositif-client, **caractérisé en ce que** l'on désigne de manière dynamique l'un de ces concentrateurs comme étant le « concentrateur principal » et le, ou les autres concentrateurs comme étant les « concentrateurs secondaires », et **en ce que** ledit concentrateur principal ou un concentrateur secondaire :
a) reçoit un paquet de données émis par le dispositif-client à destination d'un correspondant,
b) retire du paquet reçu, le cas échéant, toutes les options à chemins multiples,
c) remplace l'adresse source du paquet reçu par une adresse du concentrateur principal, et
d) envoie le paquet ainsi modifié audit correspondant.

2. Procédé d'émulation d'une connexion à chemins multiples selon la revendication 1, **caractérisé en ce que** :
• ledit paquet émis par le dispositif-client est intercepté par un concentrateur secondaire,
• ledit concentrateur secondaire met en œuvre les étapes suivantes :
- insertion dans le paquet d'une option mentionnant ladite adresse source du paquet ainsi que d'une option mentionnant l'adresse de destination du paquet,
- remplacement de l'adresse source du paquet par une adresse du concentrateur secondaire,
- remplacement de l'adresse de destination du paquet par une adresse dudit concentrateur principal, et
- envoi du paquet ainsi modifié au concentrateur principal, et
• lesdites étapes a), b), c) et d) sont ensuite mises en œuvre par le concentrateur principal.

3. Procédé d'émulation d'une connexion à chemins multiples selon la revendication 1 ou la revendication 2, **caractérisé en ce que**, suite à l'émission par ledit correspondant d'un paquet de données destiné audit dispositif-client :
a') ledit paquet est intercepté par ledit concentrateur principal, ou par un concentrateur secondaire situé sur un chemin suivi par le paquet et aboutissant à ladite adresse du concentrateur principal,
b') le concentrateur principal ou un concentrateur secondaire insère, le cas échéant, des options à chemins multiples dans le paquet, et
c') le concentrateur principal ou un concentrateur secondaire remplace l'adresse de destination du paquet par une adresse du dispositif-client, et envoie le paquet ainsi modifié au dispositif-client.

4. Procédé d'émulation d'une connexion à chemins multiples selon la revendication 3, **caractérisé en ce que** ladite étape c') comprend les sous-étapes suivantes :
- ledit concentrateur principal remplace l'adresse de destination du paquet par l'adresse d'un concentrateur secondaire, insère dans le paquet une option mentionnant l'adresse dudit dispositif-client, et envoie le paquet ainsi modifié audit concentrateur secondaire,
- le concentrateur secondaire remplace l'adresse de destination du paquet par l'adresse du dispositif-client mentionnée dans ladite option, et
- le concentrateur secondaire envoie le paquet ainsi modifié au dispositif-client.

5. Procédé d'émulation d'une connexion à chemins multiples selon l'une quelconque des revendications 1 à 4, **caractérisé en ce qu'**un concentrateur de ladite pluralité de concentrateurs est désigné comme concentrateur « principal » lorsque, ledit dispositif-client ayant initialisé une connexion à chemins multiples et envoyé un premier paquet de données sur cette connexion, ledit paquet est d'abord intercepté par ledit concentrateur.

6. Procédé d'émulation d'une connexion à chemins multiples selon l'une quelconque des revendications 1 à 4, **caractérisé en ce qu'**un concentrateur de ladite pluralité de concentrateurs est désigné comme concentrateur « principal » ou concentrateur « secondaire » en fonction de l'adresse de destination dudit paquet reçu.

7. Procédé d'émulation d'une connexion à chemins multiples selon l'une quelconque des revendications 1 à 4, **caractérisé en ce qu'**un concentrateur de ladite pluralité de concentrateurs est désigné comme concentrateur « principal » ou concentrateur « secondaire » en fonction de la disponibilité d'une route issue de ce concentrateur pour joindre ledit correspondant.

8. Procédé d'émulation d'une connexion à chemins multiples selon l'une quelconque des revendications 1 à 4, **caractérisé en ce qu'**un concentrateur de ladite pluralité de concentrateurs est désigné comme concentrateur « principal » ou concentrateur « secondaire » en fonction de la Qualité de Service offerte par le concentrateur pour joindre ledit correspondant.

9. Concentrateur, situé dans un réseau auquel un dispositif-client donné est connecté, désigné d'une manière dynamique comme étant un concentrateur principal et comprenant des moyens pour intercepter les paquets de données émis ou reçus par ledit dispositif-client et pour agréger des connexions exploitant une pluralité de chemins susceptibles d'être utilisés par le dispositif-client, **caractérisé en ce qu'**il comprend en outre des moyens pour :
- intercepter un paquet de données émis par le dispositif-client à destination d'un correspondant,
- retirer du paquet, le cas échéant, toutes les options à chemins multiples,
- remplacer l'adresse source du paquet par une adresse du concentrateur principal, et
- envoyer le paquet ainsi modifié audit correspondant.

10. Concentrateur principal selon la revendication 9, **caractérisé en ce qu'**il comprend en outre des moyens pour :
- intercepter un paquet de données émis par ledit correspondant à destination dudit dispositif-client,
- insérer, le cas échéant, des options à chemins multiples dans ledit paquet,
ainsi que des moyens pour :
- remplacer l'adresse de destination du paquet par une adresse du dispositif-client, et envoyer le paquet ainsi modifié au dispositif-client, et/ou
- remplacer l'adresse de destination du paquet par l'adresse d'un autre concentrateur, dit concentrateur secondaire, insérer dans le paquet une option mentionnant l'adresse du dispositif-client, et envoyer le paquet ainsi modifié audit concentrateur secondaire.

11. Concentrateur, situé dans un réseau auquel un dispositif-client donné est connecté, désigné d'une manière dynamique comme étant un concentrateur secondaire, et comprenant des moyens pour intercepter les paquets de données émis ou reçus par ledit dispositif-client et pour agréger des connexions exploitant une pluralité de chemins susceptibles d'être utilisés par le dispositif-client, **caractérisé en ce qu'**il comprend en outre des moyens, déclenchés suite à l'interception par ledit concentrateur secondaire d'un paquet de données émis par le dispositif-client à destination d'un correspondant, pour :
- retirer du paquet, le cas échéant, toutes les options à chemins multiples, remplacer l'adresse source du paquet par une adresse d'un autre concentrateur, dit concentrateur principal, et envoyer le paquet ainsi modifié audit correspondant, et/ou
- insérer dans le paquet une option mentionnant ladite adresse source du paquet ainsi qu'une option mentionnant l'adresse de destination du paquet, remplacer l'adresse source du paquet par une adresse dudit concentrateur secondaire, remplacer l'adresse de destination du paquet par une adresse dudit concentrateur principal, et envoyer le paquet ainsi modifié au concentrateur principal.

12. Concentrateur secondaire selon la revendication 11, **caractérisé en ce qu'**il comprend en outre des moyens pour :
- recevoir un paquet de données de la part d'un concentrateur principal ou, respectivement, dudit correspondant,
- remplacer l'adresse de destination du paquet reçu par l'adresse du dispositif-client mentionnée dans une option contenue dans le paquet reçu, ou, respectivement, mentionnée dans une table de connexions accessible audit concentrateur secondaire, et
- envoyer le paquet ainsi modifié audit dispositif-client.

13. Système d'émulation d'une connexion à chemins multiples, comprenant :
- un concentrateur principal selon la revendication 9 ou la revendication 10, et
- au moins un concentrateur secondaire selon la revendication 11 ou la revendication 12.

14. Moyen de stockage de données inamovible, ou partiellement ou totalement amovible, comportant des instructions de code de programme informatique pour l'exécution des étapes d'un procédé d'émulation d'une connexion à chemins multiples selon l'une quelconque des revendications 1 à 8.

15. Programme d'ordinateur téléchargeable depuis un réseau de communications et/ou stocké sur un support lisible par ordinateur et/ou exécutable par un microprocesseur, **caractérisé en ce qu'**il comprend des instructions pour l'exécution des étapes d'un procédé d'émulation d'une connexion à chemins multiples selon l'une quelconque des revendications 1 à 8, lorsqu'il est exécuté sur un ordinateur.

## Patentansprüche

1. Verfahren zur Emulation einer Mehrwegverbindung, wobei die von einer Client-Vorrichtung gesendeten oder empfangenen Datenpakete von einer Vielzahl von Hüben abgefangen werden, die in mindestens einem Netzwerk, mit dem die Client-Vorrichtung verbunden ist, angeordnet sind, wobei jeder Hub das Bündeln von Verbindungen, die eine Vielzahl von Wegen, die von der Client-Vorrichtung benutzt werden können, ausnutzen, ermöglicht, **dadurch gekennzeichnet, dass** einer dieser Hüben dynamisch als "Haupthub" und der oder die anderen Hübe als "Sekundärhübe" bezeichnet werden und dass der Haupthub oder ein Sekundärhub:
a) ein Datenpaket empfängt, das von der Client-Vorrichtung an einen Teilnehmer gesendet wird,
b) aus dem empfangenen Paket ggf. alle Mehrwegoptionen entfernt,
c) die Quelladresse des empfangenen Pakets durch eine Adresse des Haupthubs ersetzt und
d) das so modifizierte Paket an den Teilnehmer schickt.

2. Verfahren zur Emulation einer Mehrwegverbindung nach Anspruch 1, **dadurch gekennzeichnet, dass**:
• das von der Client-Vorrichtung gesendete Paket von einem Sekundärhub abgefangen wird,
• der Sekundärkhub die folgenden Schritte implementiert:
- Einfügen, in das Paket, einer Option, die die Quelladresse des Pakets angibt, sowie einer Option, die die Zieladresse des Pakets angibt,
- Ersetzen der Quelladresse des Pakets durch eine Adresse des Sekundärhubs,
- Ersetzen der Zieladresse des Pakets durch eine Adresse des Haupthubs und
- Schicken des so modifizierten Pakets an den Hauptkhub, und
• die Schritte a), b), c) und d) in Folge durch den Haupthub implementiert werden.

3. Verfahren zur Emulation einer Mehrwegverbindung nach Anspruch 1 oder Anspruch 2, **dadurch gekennzeichnet, dass** nach dem Senden, durch den Teilnehmer, eines Datenpakets an die Client-Vorrichtung:
a') das Paket von dem Haupthub oder von einem Sekundärhub, der auf einem von dem Paket verfolgten Weg, der an der Adresse des Haupthubs endet, angeordnet ist, abgefangen wird,
b') der Haupthub oder ein Sekundärhub ggf. Mehrwegoptionen in das Paket einfügt und
c') der Haupthub oder ein Sekundärhub die Zieladresse des Pakets durch eine Adresse der Client-Vorrichtung ersetzt und das so modifizierte Paket an die Client-Vorrichtung schickt.

4. Verfahren zur Emulation einer Mehrwegverbindung nach Anspruch 3, **dadurch gekennzeichnet, dass** der Schritt c') die folgenden Unterschritte beinhaltet:
- der Haupthub ersetzt die Zieladresse des Pakets durch die Adresse eines Sekundärhubs, fügt eine Option in das Paket ein, die die Adresse der Client-Vorrichtung angibt, und schickt das so modifizierte Paket an den Sekundärhub,
- der Sekundärhub ersetzt die Zieladresse des Pakets durch die in der Option angegebene Adresse der Client-Vorrichtung und
- der Sekundärhub schickt das so modifizierte Paket an die Client-Vorrichtung.

5. Verfahren zur Emulation einer Mehrwegverbindung nach einem der Ansprüche 1 bis 4, **dadurch gekennzeichnet, dass** ein Hub der Vielzahl von Hüben als "Haupthub" bezeichnet wird, wenn, nachdem die Client-Vorrichtung eine Mehrwegverbindung initialisiert und ein erstes Datenpaket über diese Verbindung geschickt hat, das Paket zuerst von diesem Hub abgefangen wird.

6. Verfahren zur Emulation einer Mehrwegverbindung nach einem der Ansprüche 1 bis 4, **dadurch gekennzeichnet, dass** ein Hub der Vielzahl von Hüben in Abhängigkeit von der Zieladresse des empfangenen Pakets als "Haupthub" oder "Sekundärhub" bezeichnet wird.

7. Verfahren zur Emulation einer Mehrwegverbindung nach einem der Ansprüche 1 bis 4, **dadurch gekennzeichnet, dass** ein Hub der Vielzahl von Hüben in Abhängigkeit von der Verfügbarkeit einer von diesem Hüben abgehenden Strecke, um den Teilnehmer zu erreichen, als "Haupthub" oder "Sekundärhub" bezeichnet wird.

8. Verfahren zur Emulation einer Mehrwegverbindung nach einem der Ansprüche 1 bis 4, **dadurch gekennzeichnet, dass** ein Hub der Vielzahl von Hüben in Abhängigkeit von der durch den Hub bereitgestellten Dienstequalität, um den Teilenehmer zu erreichen, als "Haupthub" oder "Sekundärhub" bezeichnet wird.

9. Hub, der in einem Netzwerk, mit dem eine gegebene Client-Vorrichtung verbunden ist, angeordnet ist, dynamisch bezeichnet als ein Haupthub und beinhaltend Mittel zum Abfangen der Datenpakete, die von der Client-Vorrichtung gesendet oder empfangen werden, und zum Bündeln von Verbindungen, die eine Vielzahl von Wegen, die von der Client-Vorrichtung benutzt werden können, ausnutzen, **dadurch gekennzeichnet, dass** er ferner Mittel für Folgendes beinhaltet:
- Abfangen eines von der Client-Vorrichtung an einen Teilnehmer gesendeten Datenpakets,
- ggf. Entfernen, aus dem Paket, aller Mehrwegoptionen,
- Ersetzen der Quelladresse des Pakets durch eine Adresse des Haupthubs und
- Schicken des so modifizierten Pakets an den Teilnehmer.

10. Haupthub nach Anspruch 9, **dadurch gekennzeichnet, dass** er ferner Mittel für Folgendes beinhaltet:
- Abfangen eines von dem Teilnehmer an die Client-Vorrichtung gesendeten Datenpakets,
- ggf. Einfügen von Mehrwegoptionen in das Paket, sowie Mittel für Folgendes:
- Ersetzen der Zieladresse des Pakets durch eine Adresse der Client-Vorrichtung und Schicken des so modifizierten Pakets an die Client-Vorrichtung und/oder
- Ersetzen der Zieladresse des Pakets durch die Adresse eines anderen Hubs, genannt Sekundärhub, Einfügen, in das Paket, einer Option, die die Adresse der Client-Vorrichtung angibt, und Schicken des so modifizierten Pakets an den Sekundärhub.

11. Hub, der in einem Netzwerk, mit dem eine gegebene Client-Vorrichtung verbunden ist, angeordnet ist, dynamisch bezeichnet als ein Sekundärhub und beinhaltend Mittel zum Abfangen der Datenpakete, die von der Client-Vorrichtung gesendet oder empfangen werden, und zum Bündeln von Verbindungen, die eine Vielzahl von Wegen, die von der Client-Vorrichtung benutzt werden können, ausnutzen, **dadurch gekennzeichnet, dass** er ferner Mittel, die nach dem Abfangen, durch den Sekundärhub, eines von der Client-Vorrichtung an einen Teilnehmer gesendeten Datenpakets ausgelöst werden, für Folgendes beinhaltet:
- ggf. Entfernen, aus dem Paket, aller Mehrwegoptionen, Ersetzen der Quelladresse des Pakets durch eine Adresse eines anderen Hubs, genannt Haupthub, und Schicken des so modifizierten Pakets an den Teilnehmer und/oder
- Einfügen, in das Paket, einer Option, die die Quelladresse des Pakets angibt, sowie einer Option, die die Zieladresse des Pakets angibt, Ersetzen der Quelladresse des Pakets durch eine Adresse des Sekundärhubs, Ersetzen der Zieladresse des Pakets durch eine Adresse des Haupthubs und Schicken des so modifizierten Pakets an den Haupthub.

12. Sekundärhub nach Anspruch 11, **dadurch gekennzeichnet, dass** er ferner Mittel für Folgendes beinhaltet:
- Empfangen eines Datenpakets von einem Haupthub bzw. von dem Teilnehmer,
- Ersetzen der Zieladresse des empfangenen Pakets durch die Adresse der Client-Vorrichtung, die in einer in dem empfangenen Paket enthaltenen Option angegeben ist bzw. die in einer Verbindungstabelle, zu der der Sekundärhub Zugang hat, angegeben ist, und
- Schicken des so modifizierten Pakets an die Client-Vorrichtung.

13. System zur Emulation einer Mehrwegverbindung, das Folgendes beinhaltet:
- einen Haupthub nach Anspruch 9 oder Anspruch 10 und
- mindestens einen Sekundärhub nach Anspruch 11 oder Anspruch 12.

14. Stationäres oder teilweise oder gänzlich mobiles Mittel zur Datenspeicherung, das Computerprogrammcodeanweisungen zum Ausführen der Schritte eines Verfahrens zur Emulation einer Mehrwegverbindung nach einem der Ansprüche 1 bis 8 beinhaltet.

15. Computerprogramm, das aus einem Kommunikationsnetzwerk heruntergeladen und/oder auf einem computerlesbaren Medium gespeichert und/oder von einem Mikroprozessor ausgeführt werden kann, **dadurch gekennzeichnet, dass** es Anweisungen zum Ausführen der Schritte eines Verfahrens zur Emulation einer Mehrwegverbindung nach einem der Ansprüche 1 bis 8 beinhaltet, wenn es auf einem Computer ausgeführt wird.

## Claims

1. Method for emulating a multipath connection, in which the data packets sent or received by a given client device are intercepted by a plurality of hubs situated in at least one network to which said client device is connected, each hub making it possible to aggregate connections utilizing a plurality of paths liable to be used by the client device, **characterized in that** one of these hubs is designated in a dynamic manner as being the "main hub" and the other hub or hubs as being the "secondary hubs", and **in that** said main hub or a secondary hub:
a) receives a data packet sent by the client device destined for an opposite party,
b) removes from the received packet, if relevant, all the multipath options,
c) replaces the source address of the packet received with an address of the main hub, and
d) dispatches the packet thus modified to said opposite party.

2. Method for emulating a multipath connection according to Claim 1, **characterized in that**:
• said packet sent by the client device is intercepted by a secondary hub,
• said secondary hub implements the following steps:
- insertion into the packet of an option mentioning said source address of the packet as well as of an option mentioning the destination address of the packet,
- replacement of the source address of the packet with an address of the secondary hub,
- replacement of the destination address of the packet with an address of said main hub, and
- dispatching of the packet thus modified to the main hub, and
• said steps a), b), c) and d) are thereafter implemented by the main hub.

3. Method for emulating a multipath connection according to Claim 1 or Claim 2, **characterized in that**, subsequent to the sending by said opposite party of a data packet destined for said client device:
a') said packet is intercepted by said main hub, or by a secondary hub situated on a path followed by the packet and ending up at said address of the main hub,
b') the main hub or a secondary hub inserts, if relevant, multipath options into the packet, and
c') the main hub or a secondary hub replaces the destination address of the packet with an address of the client device, and dispatches the packet thus modified to the client device.

4. Method for emulating a multipath connection according to Claim 3, **characterized in that** said step c') comprises the following sub-steps:
- said main hub replaces the destination address of the packet by the address of a secondary hub, inserts into the packet an option mentioning the address of said client device, and dispatches the packet thus modified to said secondary hub,
- the secondary hub replaces the destination address of the packet by the client device's address mentioned in said option, and
- the secondary hub dispatches the packet thus modified to the client device.

5. Method for emulating a multipath connection according to any one of Claims 1 to 4, **characterized in that** a hub of said plurality of hubs is designated as "main" hub when, said client device having initialized a multipath connection and dispatched a first data packet on this connection, said packet is firstly intercepted by said hub.

6. Method for emulating a multipath connection according to any one of Claims 1 to 4, **characterized in that** a hub of said plurality of hubs is designated as "main" hub or "secondary" hub as a function of the destination address of said received packet.

7. Method for emulating a multipath connection according to any one of Claims 1 to 4, **characterized in that** a hub of said plurality of hubs is designated as "main" hub or "secondary" hub as a function of the availability of a route emerging from this hub in order to reach said opposite party.

8. Method for emulating a multipath connection according to any one of Claims 1 to 4, **characterized in that** a hub of said plurality of hubs is designated as "main" hub or "secondary" hub as a function of the Quality of Service offered by the hub in order to reach said opposite party.

9. Hub, situated in a network to which a given client device is connected, designated in a dynamic manner as being a main hub and comprising means for intercepting the data packets sent or received by said client device and for aggregating connections utilizing a plurality of paths liable to be used by the client device, **characterized in that** it furthermore comprises means for:
- intercepting a data packet sent by the client device destined for an opposite party,
- removing from the packet, if relevant, all the multipath options,
- replacing the source address of the packet with an address of the main hub, and
- dispatching the packet thus modified to said opposite party.

10. Main Hub according to Claim 9, **characterized in that** it furthermore comprises means for:
- intercepting a data packet sent by said opposite party destined for said client device,
- inserting, if relevant, multipath options into said packet,
as well as means for:
- replacing the destination address of the packet with an address of the client device, and dispatching the packet thus modified to the client device, and/or
- replacing the destination address of the packet by the address of another hub, termed secondary hub, inserting into the packet an option mentioning the address of the client device, and dispatching the packet thus modified to said secondary hub.

11. Hub, situated in a network to which a given client device is connected, designated in a dynamic manner as being a secondary hub, and comprising means for intercepting the data packets sent or received by said client device and for aggregating connections utilizing a plurality of paths liable to be used by the client device, **characterized in that** it furthermore comprises means, triggered subsequent to the interception by said secondary hub of a data packet sent by the client device destined for an opposite party, for:
- removing from the packet, if relevant, all the multipath options, replacing the source address of the packet with an address of another hub, termed main hub, and dispatching the packet thus modified to said opposite party, and/or
- inserting into the packet an option mentioning said source address of the packet as well as an option mentioning the destination address of the packet, replacing the source address of the packet with an address of said secondary hub, replacing the destination address of the packet with an address of said main hub, and dispatching the packet thus modified to the main hub.

12. Secondary hub according to Claim 11, **characterized in that** it furthermore comprises means for:
- receiving a data packet from a main hub or, respectively, from said opposite party,
- replacing the destination address of the packet received by the client device's address mentioned in an option contained in the received packet, or, respectively, mentioned in a table of connections which is accessible to said secondary hub, and
- dispatching the packet thus modified to said client device.

13. System for emulating a multipath connection, comprising:
- a main hub according to Claim 9 or Claim 10, and
- at least one secondary hub according to Claim 11 or Claim 12.

14. Irremovable, or partially or totally removable means of data storage, comprising computer program code instructions for the execution of the steps of a method for emulating a multipath connection according to any one of Claims 1 to 8.

15. Computer program downloadable from a communications network and/or stored on a medium readable by computer and/or executable by a microprocessor, **characterized in that** it comprises instructions for the execution of the steps of a method for emulating a multipath connection according to any one of Claims 1 to 8, when it is executed on a computer.
